# EUROPEAN PATENT SPECIFICATION

(11) **EP 3 569 569 B1**
(45) Date of publication and mention of the grant of the patent: **16.12.2020**
(21) Application number: 17891949.4
(22) Date of filing: 22.12.2017
(51) Int. Cl.: C01B 3/38, H01M 8/06, H01M 8/10

(54) **HYDROGEN PRODUCTION SYSTEM AND OPERATING METHOD THEREFOR**
WASSERSTOFFHERSTELLUNGSSYSTEM UND BETRIEBSVERFAHREN DAFÜR
SYSTÈME DE PRODUCTION D'HYDROGÈNE ET SA MÉTHODE DE FONCTIONNEMENT

(30) Priority: 13.01.2017 JP 2017003809; 25.01.2017 JP 2017011369
(43) Date of publication of application: 20.11.2019
(73) Proprietor: Panasonic Intellectual Property Management Co., Ltd., Osaka-shi, Osaka 540-6207 (JP)
(72) Inventor: TAGUCHI, Kiyoshi, Osaka-shi Osaka 540-6207 (JP); IIYAMA, Shigeru, Osaka-shi Osaka 540-6207 (JP); ASO, Tomonori, Osaka-shi Osaka 540-6207 (JP); HARADA, Chie, Osaka-shi Osaka 540-6207 (JP); NAKAJIMA, Tomoyuki, Osaka-shi Osaka 540-6207 (JP)
(74) Representative: Grünecker Patent- und Rechtsanwälte PartG mbB
(86) International application number: PCT/JP2017/046073
(87) International publication number: WO 2018/131426

(56) References cited:
- EP-A1- 3 106 428
- WO-A1-2013/150717
- WO-A1-2014/147991
- JP-A- 2002 025 596
- JP-A- 2016 111 007
- JP-A- 2017 001 903
- US-A1- 2010 040 915

## Description

### TECHNICAL FIELD

The present disclosure relates to a hydrogen generating system in which a plurality of hydrogen generating devices are connected in parallel to generate a hydrogen-containing gas by reforming a hydrocarbon raw material and a method for operating the hydrogen generating system.

### BACKGROUND ART

The hydrogen-containing gas used for fuel during power generation of a fuel cell is not prepared as a general infrastructure gas. For this reason, fuel cell system includes the hydrogen generating device including a reformer. In the reformer, the hydrogen-containing gas is generated by a reforming reaction from the hydrocarbon, such as a town gas, a liquefied petroleum gas, and a natural gas, which are of the general infrastructure gas.

For example, a steam reforming reaction is used as the reforming reaction. In the steam reforming reaction, hydrocarbon that becomes the raw material and water vapor react with each other at a high temperature of about 600°C to about 700°C using a Ni-based, Ru-based, or Rh-based reforming catalyst. Consequently, the hydrogen-containing gas mainly containing hydrogen is generated.

A desulfurizer is installed on an upstream side of the reformer because the raw material contains a sulfur component to degrade the reforming catalyst. A hydro-desulfurizer that performs desulfurization at 200°C to 300°C by circulating the raw material to which hydrogen is added in the desulfurizer loading a catalyst mainly containing copper or zinc can be cited as an example of the desulfurizer. A combustor heats the reformer in order to heat the reformer to a temperature necessary for the steam reforming reaction.

In the reformer, carbon monoxide (CO) is generated as a side reaction. For this reason, a CO remover is provided downstream of the reformer in the case that carbon monoxide poisons an anode catalyst of the fuel cell to decrease a voltage (in the case of a solid polymer type fuel cell). The CO remover includes a CO modification catalyst causing carbon monoxide to react with steam to decrease carbon monoxide and a selective oxidation catalyst causing carbon monoxide to react with oxygen to decrease carbon monoxide.

A natural gas in a certain region contains several percents of nitrogen. The Ru catalyst frequently used in the steam reforming reaction has catalyst activity generating ammonia from nitrogen in the natural gas and hydrogen generated by the reforming at a temperature of about 600°C. Generation of ammonia of about 20 ppm at 600°C to 700°C is calculated from equilibrium.

When ammonia is supplied to the CO remover, the catalyst activity is decreased depending on a catalyst species (for example, Ru) of the selective oxidation catalyst loaded in the CO remover, and an outlet CO concentration increases gradually. For this reason, gas having a high CO concentration is supplied to the downstream fuel cell, and power generation cannot be continued.

A hydrogen generating device that supplies a nitrogen-containing compound to the reformer to poison the selective oxidation catalyst of the CO remover by ammonia generated during the reforming reaction is supposed. In this case, regeneration desorbing a poisoning substance from the selective oxidation catalyst by reduction is performed by setting an operating temperature of the selective oxidation catalyst higher than usual. Consequently, there is proposed a method for supplying a hydrogen-containing gas in which the carbon monoxide concentration is sufficiently decreased and a method for stopping the power generation of the fuel cell to regenerate the selective oxidation catalyst under a reducing atmosphere before the selective oxidation catalyst is poisoned to insufficiently decrease the carbon monoxide concentration (for example, PTL 1).

However, in the conventional method, the selective oxidation catalyst does not become the sufficient reducing atmosphere only by setting an operating temperature of the CO remover higher than usual during the operation of the hydrogen generating device, and a sufficient regeneration effect is not obtained. When the supply of air that is an oxidizing gas is stopped in order to sufficiently regenerate the selective oxidation catalyst, the hydrogen-containing gas in which the CO concentration is decreased cannot be supplied to the fuel cell.

PTL 2 relates to a hydrogen generator having a reformer that generates a hydrogen-containing gas using a raw material gas containing nitrogen, and a CO remover that reduces carbon monoxide contained in the hydrogen-containing gas by an oxidation reaction, and also relates to a fuel cell system, and a method for operating same.

PTL 3 relates to a hydrogen generator which generates a hydrogen-containing gas by using a material gas containing nitrogen, a fuel cell system which is supplied with the hydrogen-containing gas from the hydrogen generator to a fuel cell thereof to generate electric power, and their operating methods.

PTL 4 discloses a hydrogen generating apparatus which includes a hydrodesulfurizer for reducing a concentration of a sulfur compound contained in raw material fed from a raw material feed path; a reformer for reforming the raw material discharged from the hydrodesulfurizer to generate hydrogen-containing gas; and a recycled gas flow path for feeding a part of the hydrogen-containing gas discharged from the reformer to the raw material feed path. The hydrogen generating apparatus further includes an ejector provided at a junction of the raw material feed path and recycled gas flow path, and configured to draw the hydrogen-containing gas from recycled gas flow path into the raw material feed path; and a valve provided in the recycled gas flow path to close when the raw material flowing into the ejector is not larger than a predetermined flow rate.

PTL 5 discloses a fuel cell system which includes a reformer, a raw material supplier that supplies raw material to the reformer, a desulfurizer that desulfurizes the raw material, and a flow controller that controls the flow of gas in a recycle gas flow path; a steam supply unit that supplies steam to the reformer, a fuel cell, a combustion unit that burns off-gas discharged from the fuel cell, and a controller; then, the raw material discharged from the fuel cell as off-gas is burned in the combustion section, and then the gas discharged from the reformer is circulated in the recycle gas flow path by the flow controller, and then the water vapor is modified by the water vapor feeder. The gas discharged from the reformer is circulated in the recycle gas flow path by the flow controller, and then the raw material discharged from the fuel cell as off-gas is burned in the combustion section.

PTL 6 discloses a phosphoric acid type fuel for efficiently removing ammonia generated in a reformer by nitrogen contained in a raw fuel, making the ammonia removing device compact and improving the reliability of ammonia removal.

For this reason, the hydrogen generating device cannot continuously supply the hydrogen-containing gas in which the CO concentration is sufficiently decreased to the fuel cell that is a hydrogen utilization device for a long time, but it is necessary to stop the power generation of the fuel cell, which results in a problem in that the fuel cell cannot continuously be operated for a long time.

### Citation List

### Patent Literature

PTL 1: Japanese Patent No. 4991571
PTL 2: JP 2017-001903 A
PTL 3: US 2010/040915 A1
PTL 4: EP 3106428 A1
PTL 5: JP 2016-111007 A
PLT 6: JP 2002-025596 A

### SUMMARY OF THE INVENTION

The present disclosure provides a hydrogen generating system that can continuously and stably supply the hydrogen-containing gas to the hydrogen utilization device for a long time while preventing degradation of the selective oxidation catalyst contained in the CO remover due to ammonia.

According to one aspect of the present disclosure, a hydrogen generating system includes a plurality of hydrogen generating devices connected in parallel and a controller.

Each of the plurality of hydrogen generating devices includes a reformer that generates a hydrogen-containing gas from a raw material, a carbon monoxide (CO) remover that decreases a concentration of carbon monoxide contained in the hydrogen-containing gas by using a selective oxidation catalyst and an oxidizing gas, and an oxidizing gas feeder that supplies the oxidizing gas to the CO remover. The each of the plurality of hydrogen generating devices also includes a raw material supply passage through which the raw material is supplied to the reformer, a raw material supply unit provided in a middle of the raw material supply passage, a hydrogen supply passage through which the hydrogen-containing gas discharged from the CO remover is supplied to a hydrogen utilization device, a recycle passage that is branched at a branching point from a middle of the hydrogen supply passage to mix at least part of the hydrogen-containing gas discharged from the CO remover into the raw material, and a hydrogen supply passage sealing valve provided downstream of the branching point in the hydrogen supply passage.

The controller is configured to cause at least one of the plurality of hydrogen generating devices to perform a second action to supply the oxidizing gas and the hydrogen-containing gas to the CO remover, while at least another of the plurality of hydrogen generating devices performs a first action to supply the hydrogen-containing gas to the CO remover with the supply of the oxidizing gas to the CO remover stopped. The controller is configured to close the hydrogen supply passage sealing valve of the at least another of the plurality of hydrogen generating devices that currently performs the first action to mix the hydrogen-containing gas discharged from the CO remover of the at least another of the plurality of hydrogen generating devices that currently performs the first action into the raw material through the recycle passage.

Consequently, the whole hydrogen-containing gas discharged from the CO remover that currently performs the first action, the carbon monoxide concentration being not decreased in the hydrogen-containing gas, is mixed into the raw material of at least one hydrogen generating device that currently performs the first action or the second action. At the same time, the hydrogen-containing gas discharged from the CO remover that currently perform the second action, the carbon monoxide concentration being decreased in the hydrogen-containing gas, is supplied to a hydrogen utilization device. Consequently, the CO remover that currently performs the first action can be regenerated while the supply of the hydrogen-containing gas to the hydrogen utilization device is continued.

The present disclosure can construct the hydrogen generating system that continuously and stably supplies the hydrogen-containing gas to the hydrogen utilization device for a long time while preventing the degradation of the selective oxidation catalyst contained in the CO remover due to ammonia. In the case that the hydrogen utilization device is the fuel cell, the fuel cell can continuously be operated for a long time.

### BRIEF DESCRIPTION OF DRAWINGS

FIG. 1 is a block diagram illustrating a configuration of a hydrogen generating system according to first and fourth exemplary embodiments of the present disclosure.
FIG. 2 is a flowchart illustrating a processing action of hydrogen generating system 31 according to the first exemplary embodiment of the present disclosure.
FIG. 3 is a block diagram illustrating a configuration of a hydrogen generating system according to a second exemplary embodiment of the present disclosure.
FIG. 4 is a flowchart illustrating a processing action of the hydrogen generating system according to the second exemplary embodiment of the present disclosure.
FIG. 5 is a block diagram illustrating a configuration of a hydrogen generating system according to a third exemplary embodiment of the present disclosure.
FIG. 6 is a flowchart illustrating a processing action of the hydrogen generating system according to the third exemplary embodiment of the present disclosure.
FIG. 7 is a flowchart illustrating a processing action of a hydrogen generating system according to a fourth exemplary embodiment of the present disclosure.
FIG. 8 is a block diagram illustrating a configuration of a hydrogen generating system according to fifth to seventh exemplary embodiments of the present disclosure.
FIG. 9A is a flowchart illustrating an action of the hydrogen generating system according to the fifth exemplary embodiment of the present disclosure.
FIG. 9B is a flowchart illustrating the action of the hydrogen generating system according to the fifth exemplary embodiment of the present disclosure.
FIG. 9C is a flowchart illustrating the action of the hydrogen generating system according to the fifth exemplary embodiment of the present disclosure.
FIG. 9D is a flowchart illustrating the action of the hydrogen generating system according to the fifth exemplary embodiment of the present disclosure.
FIG. 9E is a flowchart illustrating the action of the hydrogen generating system according to the fifth exemplary embodiment of the present disclosure.
FIG. 9F is a flowchart illustrating the action of the hydrogen generating system according to the fifth exemplary embodiment of the present disclosure.
FIG. 10A is a flowchart illustrating an action of the hydrogen generating system according to the sixth exemplary embodiment of the present disclosure.
FIG. 10B is a flowchart illustrating the action of the hydrogen generating system according to the sixth exemplary embodiment of the present disclosure.
FIG. 10C is a flowchart illustrating the action of the hydrogen generating system according to the sixth exemplary embodiment of the present disclosure.
FIG. 10D is a flowchart illustrating the action of the hydrogen generating system according to the sixth exemplary embodiment of the present disclosure.
FIG. 10E is a flowchart illustrating the action of the hydrogen generating system according to the sixth exemplary embodiment of the present disclosure.
FIG. 10F is a flowchart illustrating the action of the hydrogen generating system according to the sixth exemplary embodiment of the present disclosure.
FIG. 11A is a flowchart illustrating an action of the hydrogen generating system according to a seventh exemplary embodiment of the present disclosure.
FIG. 11B is a flowchart illustrating the action of the hydrogen generating system according to the seventh exemplary embodiment of the present disclosure.
FIG. 11C is a flowchart illustrating the action of the hydrogen generating system according to the seventh exemplary embodiment of the present disclosure.
FIG. 11D is a flowchart illustrating the action of the hydrogen generating system according to the seventh exemplary embodiment of the present disclosure.
FIG. 11E is a flowchart illustrating the action of the hydrogen generating system according to the seventh exemplary embodiment of the present disclosure.
FIG. 11F is a flowchart illustrating the action of the hydrogen generating system according to the seventh exemplary embodiment of the present disclosure.

### DESCRIPTION OF EMBODIMENTS

### (An example of aspect that can be obtained by the present disclosure)

A first aspect of the present disclosure is a hydrogen generating system including a plurality of hydrogen generating devices connected in parallel and a controller.

Each of the plurality of hydrogen generating devices includes a reformer that generates a hydrogen-containing gas from a raw material, a carbon monoxide (CO) remover that decreases a concentration of carbon monoxide contained in the hydrogen-containing gas by using a selective oxidation catalyst and an oxidizing gas, an oxidizing gas feeder that supplies the oxidizing gas to the CO remover, a raw material supply passage through which the raw material is supplied to the reformer, a raw material supply unit provided in a middle of the raw material supply passage, and a hydrogen supply passage through which the hydrogen-containing gas discharged from the CO remover is supplied to the hydrogen utilization device. The each of the plurality of hydrogen generating devices also includes a recycle passage that is branched at a branching point from a middle of the hydrogen supply passage to mix at least part of the hydrogen-containing gas discharged from the CO remover into the raw material, and a hydrogen supply passage sealing valve provided downstream of the branching point in the hydrogen supply passage.

The controller is configured to cause at least one of the plurality of hydrogen generating devices to perform a second action to supply the oxidizing gas and the hydrogen-containing gas to the CO remover, while at least another of the plurality of hydrogen generating devices performs a first action to supply the hydrogen-containing gas to the CO remover with the supply of the oxidizing gas to the CO remover stopped. The controller is configured to close the hydrogen supply passage sealing valve of the at least another of the plurality of hydrogen generating devices that currently performs the first action to mix the hydrogen-containing gas discharged from the CO remover of the at least another of the plurality of hydrogen generating devices that currently performs the first action into the raw material through the recycle passage.

Consequently, the whole hydrogen-containing gas discharged from the CO remover that currently performs the first action, the carbon monoxide concentration being not decreased in the hydrogen-containing gas, is mixed into the raw material of at least one hydrogen generating device that currently performs the first action or the second action. At the same time, the hydrogen-containing gas discharged from the CO remover that currently perform the second action, the carbon monoxide concentration being decreased in the hydrogen-containing gas, is supplied to the hydrogen utilization device. Consequently, the CO remover that currently performs the first action can be regenerated while the supply of the hydrogen-containing gas to the hydrogen utilization device is continued.

According to a second aspect of the present disclosure, in the hydrogen generating system of the first aspect, the each of the plurality of hydrogen generating devices includes a hydro-desulfurizer in the raw material supply passage, the hydro-desulfurizer removing a sulfur component from the raw material by a hydrodesulfurization reaction. The recycle passage is a passage through which the at least part of the hydrogen-containing gas discharged from the CO remover is supplied to a part of the raw material supply passage to mix the at least part of the hydrogen-containing gas into the raw material upstream of the hydro-desulfurizer, the part of the raw material supply passage being located upstream of the hydro-desulfurizer in the raw material supply passage.

Consequently, part of the hydrogen-containing gas flowing in hydrogen supply passage flows into the raw material supply passage, and the hydrogen-containing gas can be mixed into the raw material gas. Using the hydrogen-containing gas mixed into the raw material, the sulfur component contained in the raw material can be removed by the hydrodesulfurization reaction in the hydro-desulfurizer.

According to a third aspect of the present disclosure, in the hydrogen generating system of the first or second aspect, the recycle passage is connected to the raw material supply passage so as to mix the at least part of the hydrogen-containing gas discharged from the CO remover into the raw material before branched in the plurality of hydrogen generating devices. A recycle passage sealing valve that opens and closes the recycle passage and provided in the recycle passage. The controller is configured to open the recycle passage sealing valve of the at least another of the plurality of hydrogen generating devices that currently performs the first action. The controller is configured to close the recycle passage sealing valve of the at least one of the plurality of hydrogen generating devices supplied with the hydrogen-containing gas from the at least another of the plurality of hydrogen generating devices through the recycle passage.

Consequently, the whole hydrogen-containing gas generated by the hydrogen generating device that currently performs the second action, the carbon monoxide concentration being decreased by the CO remover, is supplied to the hydrogen utilization device without returning to the raw material through the recycle passage. For this reason, the more hydrogen-containing gas can efficiently be supplied to the hydrogen utilization device.

When the whole amount of hydrogen-containing gases generated by the hydrogen generating device that currently performs the first action, the carbon monoxide concentration being not decreased by the CO remover, is mixed into the raw material through the recycle passage, the hydrogen-containing gas mixed into the raw material through the recycle passage can be prevented from becoming too much. At the same time, the hydrogen-containing gas supplied to the hydrogen utilization device can be prevented from becoming too little.

An end downstream of the recycle passage is connected to a place where the raw material flows before the raw material supply passage is branched into the plurality of hydrogen generating devices. Consequently, the raw material mixed into the hydrogen-containing gas generated by the hydrogen generating device that currently performs the first action, the carbon monoxide concentration being not decreased by the CO remover, can commonly be used in the plurality of hydrogen generating devices. In the hydrogen generating device that currently performs the second action, the hydrogen-containing gas in which the carbon monoxide concentration is decreased can be generated using the raw material of the hydrogen generating device.

In the case that the hydro-desulfurizer is provided, the hydro-desulfurizer can be disposed in each of the plurality of hydrogen generating devices, or one hydro-desulfurizer can be disposed in the raw material supply passage through which the raw material flows before the raw material supply passage is branched into the plurality of hydrogen generating devices. In the latter case, the hydro-desulfurizer can commonly be used in the plurality of hydrogen generating devices. When the controller controls the recycle passage sealing valve, the hydrogen generating system can efficiently be operated while a large amount of hydrogen-containing gases more than necessary is prevented from being supplied to the hydro-desulfurizer through the recycle passage.

According to a fourth aspect of the present disclosure, in the hydrogen generating system of the first or second aspect, the recycle passage is connected to the raw material supply passage so as to mix the at least part of the hydrogen-containing gas discharged from the CO remover into the raw material after branched in the plurality of hydrogen generating devices. The recycle passage includes a plurality of recycle passages. The plurality of recycle passages communicate with each other through a communication passage. The hydrogen generating system includes a recycle passage sealing valve that opens and closes the recycle passage between a connecting point of the communication passage and the recycle passage and a starting point of the recycle passage. The controller is configured to open the recycle passage sealing valve of the at least another of the plurality of hydrogen generating devices that currently performs the first action. The controller is configured to close the recycle passage sealing valve of the at least one of the plurality of hydrogen generating devices whose the recycle passage is supplied with the hydrogen-containing gas from the at least another of the plurality of hydrogen generating devices through the communication passage.

Consequently, the whole hydrogen-containing gas generated by the hydrogen generating device that currently performs the second action, the carbon monoxide concentration being decreased by the CO remover, is supplied to the hydrogen utilization device without returning to the raw material through the recycle passage. For this reason, the more hydrogen-containing gas can efficiently be supplied to the hydrogen utilization device.

When the whole amount of hydrogen-containing gases generated by the hydrogen generating device that currently performs the first action, the carbon monoxide concentration being not decreased by the CO remover, is mixed into the raw material through the recycle passage, the hydrogen-containing gas mixed into the raw material through the recycle passage can be prevented from becoming too much. At the same time, the hydrogen-containing gas supplied to the hydrogen utilization device can be prevented from becoming too little.

Ends downstream of the plurality of recycle passages provided in the plurality of hydrogen generating devices are connected to a place where the raw material flows after the raw material supply passage is branched into the plurality of hydrogen generating devices. The plurality of recycle passages communicate with each other through a communication passage. Consequently, the raw material mixed into the hydrogen-containing gas generated by the hydrogen generating device that currently performs the first action, the carbon monoxide concentration being not decreased by the CO remover, can commonly be used in the plurality of hydrogen generating devices. In the hydrogen generating device that currently performs the second action, the hydrogen-containing gas in which the carbon monoxide concentration is decreased can be generated by using the raw material of the hydrogen generating device.

In the case that the hydro-desulfurizer is provided, the hydro-desulfurizer is disposed in each of the plurality of hydrogen generating devices downstream of the raw material supply passage with respect to the place where the end downstream of the recycle passage is connected to the raw material supply passage. When the controller controls the recycle passage sealing valve, the hydrogen generating system can efficiently be operated while a large amount of hydrogen-containing gases more than necessary is prevented from being supplied to the hydro-desulfurizer through the recycle passage.

A fifth aspect of the present disclosure is a method for operating a hydrogen generating system including a plurality of hydrogen generating devices connected in parallel, each of the plurality of hydrogen generating devices including a reformer that generates a hydrogen-containing gas from a raw material, a CO remover that decreases a concentration of carbon monoxide contained in the hydrogen-containing gas by using a selective oxidation catalyst and an oxidizing gas, an oxidizing gas feeder that supplies the oxidizing gas to the CO remover, a raw material supply passage through which the raw material is supplied to the reformer, and a raw material supply unit provided in a middle of the raw material supply passage. The each of the plurality of hydrogen generating devices further includes a hydrogen supply passage through which the hydrogen-containing gas discharged from the CO remover is supplied to the hydrogen utilization device, a recycle passage that is branched at a branching point from a middle of the hydrogen supply passage to mix at least part of the hydrogen-containing gas discharged from the CO remover into the raw material, and a hydrogen supply passage sealing valve provided downstream of the branching point in the hydrogen supply passage.

The method for operating the hydrogen generating system includes causing at least one of the plurality of hydrogen generating devices to perform a second action to supply the oxidizing gas and the hydrogen-containing gas to the CO remover, while at least another of the plurality of hydrogen generating devices performs a first action to supply the hydrogen-containing gas to the CO remover with the supply of the oxidizing gas to the CO remover stopped. The method for operating the hydrogen generating system also includes closing the hydrogen supply passage sealing valve of the at least another of the plurality of hydrogen generating devices that currently performs the first action to mix the hydrogen-containing gas discharged from the CO remover of the at least another of the plurality of hydrogen generating device that currently performs the first action into the raw material through the recycle passage.

Consequently, the whole hydrogen-containing gas discharged from the CO remover that currently performs the first action, the carbon monoxide concentration being not decreased in the hydrogen-containing gas, is mixed into the raw material of at least one hydrogen generating device that currently performs the first action or the second action. At the same time, the hydrogen-containing gas discharged from the CO remover that currently perform the second action, the carbon monoxide concentration being decreased in the hydrogen-containing gas, is supplied to the hydrogen utilization device. Consequently, the CO remover that currently performs the first action can be regenerated while the supply of the hydrogen-containing gas to the hydrogen utilization device is continued.

Hereinafter, exemplary embodiments of the present disclosure will be described with reference to the drawings.

### (First exemplary embodiment)

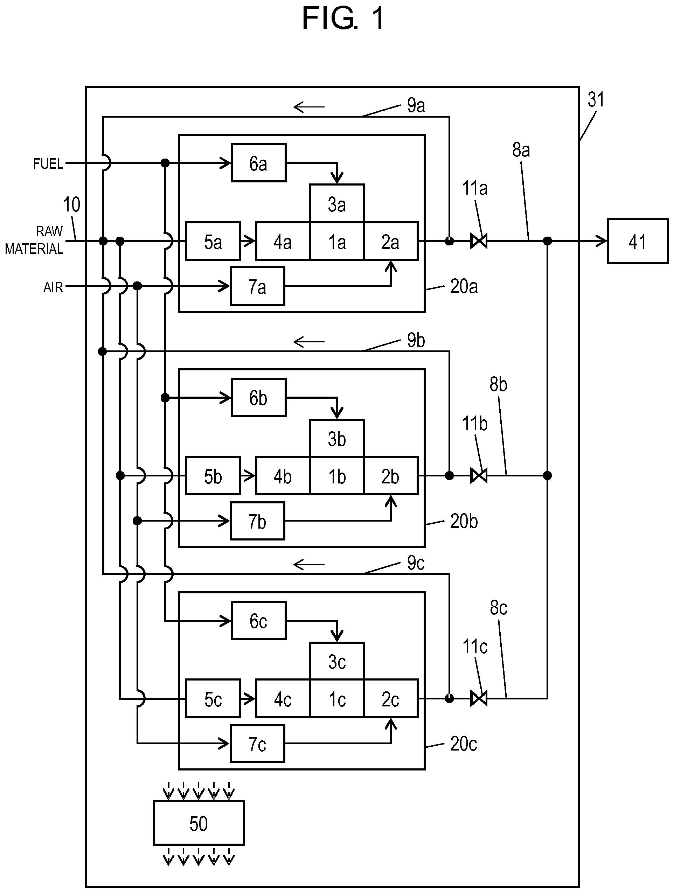

FIG. 1 is a block diagram illustrating a configuration of a hydrogen generating system according to a first exemplary embodiment of the present disclosure.

As illustrated in FIG. 1, hydrogen generating system 31 includes hydrogen generating devices 20a to 20c including reformers 1a to 1c, CO removers 2a to 2c, combustors 3a to 3c, hydro-desulfurizers 4a to 4c, raw material supply units 5a to 5c, fuel supply unit 6a to 6c, and oxidizing gas feeders 7a to 7c, respectively, hydrogen supply passage sealing valves 11a to 11c, and controller 50.

Outlets of hydrogen supply passage sealing valve 11a to 11c are connected to an inlet side of fuel cell 41 that is the hydrogen utilization device.

The suffixes of the reference marks of these components will be described with reformers 1a to 1c as an example. 1a indicates a first reformer, 1b indicates a second reformer, and 1c indicates a third reformer.

Thus, the description of reformers 1a to 1c designates three reformers of the first to third reformers. On the other hand, sometimes the description of any reformer is simply referred to as reformer 1.

Reformers 1a to 1c generate the hydrogen-containing gas by the reforming reaction by using the raw material and steam (not illustrated). In the present exemplary embodiment, the town gas mainly containing methane is used as the raw material. The steam reforming that causes the raw material to react with the steam is used as the reforming reaction of the present exemplary embodiment. A reforming catalyst (not illustrated) is loaded in reformers 1a to 1c.

CO removers 2a to 2c are provided in order to remove carbon monoxide generated as the side reaction by reformer 1a to 1c. A CO selective oxidation catalyst (not illustrated) that causes carbon monoxide to react with oxygen in air to decrease carbon monoxide is loaded in CO removers 2a to 2c.

Combustors 3a to 3c are burners that heat reformer 1a to 1c, respectively.

Hydro-desulfurizers 4a to 4c remove a sulfur component contained in the town gas after causing the sulfur component to react with hydrogen to generate hydrogen sulfide. A hydrodesulfurization catalyst (not illustrated) is loaded in hydro-desulfurizers 4a to 4c.

Raw material supply units 5a to 5c are pumps that supply the town gas to reformer 1a to 1c, respectively.

Oxidizing gas feeders 7a to 7c are pumps that supply the oxidizing gas to CO removers 2a to 2c, respectively. In the present exemplary embodiment, air is used as the oxidizing gas.

Fuel supply units 6a to 6c are pumps that supply the fuel to combustors 3a to 3c, respectively. In the present exemplary embodiment, the town gas mainly containing methane is used as the fuel.

Hydrogen supply passages 8a to 8c are passages that introduce gases discharged from CO removers 2a to 2c, respectively, to fuel cell 41.

Hydrogen supply passage sealing valves 11a to 11c are electromagnetic valves located in middles of hydrogen supply passages 8a to 8c, respectively.

Recycle passages 9a to 9c are passages through which parts of the gases discharged from CO removers 2a to 2c are supplied to the town gas before branched into hydrogen generating devices 20a to 20c, respectively.

Raw material supply passage 10 is a passage through which the town gas is supplied to reformer 1a to 1c through raw material supply units 5a to 5c and hydro-desulfurizers 4a to 4c. Raw material supply passage 10 is branched in the middle downstream of a connecting point to recycle passages 9a to 9c, and connected to hydrogen generating devices 20a to 20c (reformers 1a to 1c).

In fuel cell 41, electric power is obtained by the electrochemical reaction from hydrogen supplied from hydrogen generating system 31 and oxygen in air.

Controller 50 controls operation of hydrogen generating system 31. Controller 50 includes a signal input and output unit (not illustrated), an arithmetic processor (not illustrated), and a storage (not illustrated) in which the control program is stored.

The action and effect of hydrogen generating system 31 having the above configuration will be described below. Controller 50 controls hydrogen generating devices 20a to 20c and hydrogen supply passage sealing valves 11a to 11c of hydrogen generating system 31 to perform the following action.

During the operation of hydrogen generating system 31, the town gas is supplied to hydro-desulfurizers 4a to 4c by the action of raw material supply units 5a to 5c, and the hydrogen-containing gases generated by reformers 1a to 1c are condensed through CO removers 2a to 2c and hydrogen supply passages 8a to 8c, respectively, upstream of fuel cell 41.

The town gas is supplied to and burnt in combustors 3a to 3c by the action of fuel supply units 6a to 6c included in hydrogen generating devices 20a to 20c, and reformers 1a to 1c and CO removers 2a to 2c are heated so as to become a predetermined temperature.

The predetermined temperatures at reformers 1a to 1c are a temperature suitable for the reforming reaction. In the present exemplary embodiment, the predetermined temperature is set to 600°C. The predetermined temperatures at CO removers 2a to 2c are a temperature suitable for a selective oxidation reaction. In the present exemplary embodiment, the predetermined temperature is set to 120°C.

Parts of the hydrogen-containing gases discharged from CO removers 2a to 2c are supplied to raw material supply passage 10 through recycle passages 9a to 9c. Recycle passages 9a to 9c and raw material supply passage 10 are connected to each other upstream of raw material supply units 5a to 5c, and a branching point of recycle passages 9a to 9c and raw material supply passage 10 is lower than branching points of hydrogen supply passages 8a to 8c and recycle passages 9a to 9c in pressure.

Consequently, parts of the hydrogen-containing gases flowing in hydrogen supply passages 8a to 8c flow into raw material supply passage 10, and the hydrogen-containing gas can be mixed into the town gas.

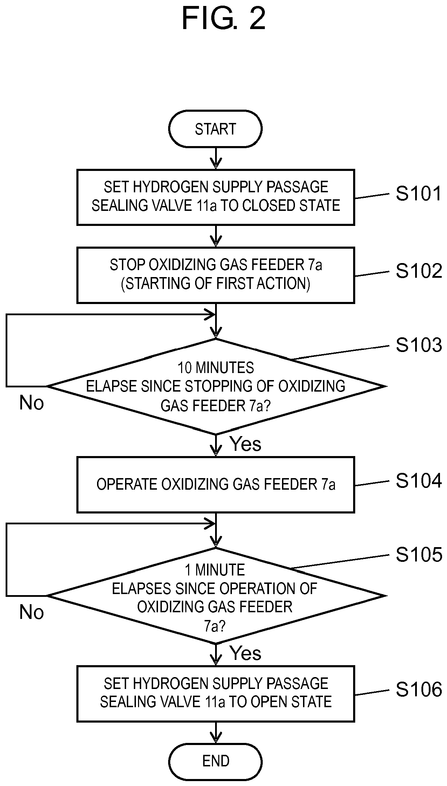

The processing action of hydrogen generating system 31 according to the first exemplary embodiment of the present disclosure will be described below with reference to FIG. 2.

FIG. 2 is a flowchart illustrating the processing action of hydrogen generating system 31 according to the first exemplary embodiment of the present disclosure.

Hereinafter, the action to supply the hydrogen-containing gas from reformers 1a to 1c to CO removers 2a to 2c with the supply of air from oxidizing gas feeders 7a to 7c to CO removers 2a to 2c stopped is written as a first action. The action to supply air from oxidizing gas feeders 7a to 7c to CO removers 2a to 2c and to supply the hydrogen-containing gas from reformers 1a to 1c to CO removers 2a to 2c is written as a second action.

Hydrogen generating devices 20a to 20c perform the second action before the first action of hydrogen generating device 20a is started. In hydrogen generating device 20a, controller 50 repeats the control of causing hydrogen generating device 20a to transition to the first action every time an accumulated time of the hydrogen generating action reaches 40 hours from beginning of the transition from the first action to the second action.

When hydrogen generating devices 20a to 20c perform the first action, the selective oxidation catalyst loaded in CO removers 2a to 2c is regenerated by desorbing the poisoning substance from the selective oxidation catalyst by the reduction.

On the other hand, while hydrogen generating device 20a performs the first action, hydrogen generating devices 20b, 20c continue the second action. As used herein, the term "40 hours" means a continuously operable time previously obtained in an experimental manner. Specifically, the term "40 hours" means time in which time necessary for the regeneration by the first action of hydrogen generating devices 20a to 20c is subtracted from the longest time in which the outlet CO concentrations of CO removers 2a to 2c do not exceed 10 ppm at which power generation performance of fuel cell 41 is decreased due to performance degradation of CO removers 2a to 2c by ammonia.

In the case that the first action of hydrogen generating device 20a is started, controller 50 first sets hydrogen supply passage sealing valve 11a to a closed state in order to block the supply of the hydrogen-containing gas from CO remover 2a to fuel cell 41 (step S101). At this point, a whole amount of the hydrogen-containing gas discharged from CO remover 2a is mixed into the town gas flowing in raw material supply passage 10 through recycle passage 9a.

Subsequently, in order to set an inside of CO remover 2a to the reducing atmosphere, controller 50 stops oxidizing gas feeder 7a to block the supply of air to CO remover 2a, thereby starting the first action (step S102).

In step S103, controller 50 counts the time since the stopping of oxidizing gas feeder 7a. When 10 minutes elapse since the stopping of oxidizing gas feeder 7a, the processing action transitions to step S104. Step S103 is repeated until 10 minutes elapse since the stopping of oxidizing gas feeder 7a. As used herein, the term "10 minutes" means time that is previously obtained in the experimental manner and is necessary for the regeneration of CO remover 2a.

In step S104, controller 50 operates oxidizing gas feeder 7a to restart the supply of air to CO remover 2a, thereby restarting the selective oxidation reaction in CO remover 2a.

In step S105, controller 50 counts the time since the restarting of the action of oxidizing gas feeder 7a. When 1 minute elapses since the restarting of the action of oxidizing gas feeder 7a, the processing action transitions to step S106. Step S105 is repeated until 1 minute elapses since the restarting of the action of oxidizing gas feeder 7a. As used herein, the term "1 minute" means time that is previously obtained in the experimental manner and is necessary for the sufficient decrease in CO concentration since the starting of the supply of air to CO remover 2a.

Finally, controller 50 sets hydrogen supply passage sealing valve 11a to an open state in order to restart the supply of the hydrogen-containing gas to fuel cell 41, and the processing action transitions from the first action to the second action (step S106).

Through the above action, the whole hydrogen-containing gas discharged from CO remover 2a that currently performs the first action, the carbon monoxide concentration being not decreased in the whole hydrogen-containing gas, is mixed into the town gas through recycle passage 9a. At the same time, the hydrogen-containing gases discharged from CO removers 2b, 2c that currently perform the second action, the carbon monoxide concentration being decreased in the hydrogen-containing gases, are supplied to fuel cell 41. Consequently, CO remover 2a can be regenerated while the operation of fuel cell 41 is continued.

Subsequently, controller 50 performs the control such that hydrogen generating device 20b transitions to the first action. The action from steps S101 to S106 is performed on hydrogen generating device 20b. The action content is identical to that of hydrogen generating device 20a, so that the description will be omitted. In this case, the reference marks described in the component and step are performed such that a suffix of "hydrogen supply passage sealing valve 11a" is replaced with a suffix of "hydrogen supply passage sealing valve 11b", for example.

Subsequently, controller 50 performs the control such that hydrogen generating device 20c transitions to the first action. The action from steps S101 to S106 is performed on hydrogen generating device 20c. The action content is identical to that of hydrogen generating device 20a, so that the description will be omitted. In this case, the reference marks described in the component and step are performed such that the suffix of "hydrogen supply passage sealing valve 11a" is replaced with the suffix of "hydrogen supply passage sealing valve 11c", for example.

As described above, hydrogen generating system 31 of the present exemplary embodiment includes hydrogen generating devices 20a to 20c connected in parallel and controller 50. Hydrogen generating devices 20a to 20c include reformers 1a to 1c that generate the hydrogen-containing gas from the raw material (town gas) and CO removers 2a to 2c that decrease the concentration of carbon monoxide contained in the hydrogen-containing gas by using the selective oxidation catalyst and the oxidizing gas (air). Hydrogen generating devices 20a to 20c include oxidizing gas feeders 7a to 7c that supply the oxidizing gas (air) to CO remover 2a to 2c, hydro-desulfurizers 4a to 4c that remove the sulfur component contained in the raw material (town gas) by a hydrodesulfurization reaction, and raw material supply passage 10 through which the raw material (town gas) is supplied to reformers 1a to 1c through hydro-desulfurizers 4a to 4c. Hydrogen generating devices 20a to 20c include raw material supply units 5a to 5c provided in the middle (upstream of hydro-desulfurizers 4a to 4c) of raw material supply passage 10 and hydrogen supply passages 8a to 8c through which the hydrogen-containing gases discharged from CO removers 2a to 2c are supplied to fuel cell 41 that is the hydrogen utilization device. Hydrogen generating devices 20a to 20c include recycle passages 9a to 9c that mix at least parts of the hydrogen-containing gases, which are branched in the middles of hydrogen supply passages 8a to 8c and discharged from CO removers 2a to 2c, in the raw material (town gas) before at least parts of the hydrogen-containing gases are branched in hydrogen generating devices 20a to 20c. Hydrogen generating devices 20a to 20c include hydrogen supply passage sealing valves 11a to 11c provided downstream of the branching points of recycle passages 9a to 9c in hydrogen supply passages 8a to 8c and upstream of the confluence of hydrogen supply passages 8a to 8c.

While at least one of hydrogen generating devices 20a to 20c performs the first action to supply the hydrogen-containing gas to CO removers 2a to 2c with the supply of the oxidizing gas (air) to CO removers 2a to 2c stopped, controller 50 causes at least another of hydrogen generating devices 20a to 20c to perform the second action to supply the oxidizing gas (air) and the hydrogen-containing gas to CO removers 2a to 2c. The hydrogen-containing gases discharged from hydrogen generating devices 20a to 20c that currently perform the second action, the carbon monoxide concentration being decreased in the hydrogen-containing gases, are supplied to fuel cell 41 that is the hydrogen utilization device. Controller 50 closes hydrogen supply passage sealing valves 11a to 11c of hydrogen generating devices 20a to 20c that currently perform the first action, and mixes the hydrogen-containing gas discharged from CO removers 2a to 2c of hydrogen generating devices 20a to 20c that currently perform the first action, the carbon monoxide concentration being not decreased in the hydrogen-containing gas, into the raw material (town gas) through recycle passages 9a to 9c before the town gas is branched in hydrogen generating devices 20a to 20c.

Thus, in hydrogen generating system 31 of the present exemplary embodiment, the whole hydrogen-containing gas discharged from CO remover 2 of hydrogen generating device 20 that currently performs the first action, the carbon monoxide concentration being not decreased in the hydrogen-containing gas, is mixed into the town gas through recycle passage 9 before the town gas is branched in hydrogen generating devices 20a to 20c. At the same time, the hydrogen-containing gas discharged from CO remover 2 of at least another hydrogen generating device 20 that currently performs the second action, the carbon monoxide concentration being decreased in the hydrogen-containing gas, is supplied to fuel cell 41 that is the hydrogen utilization device. Consequently, the selective oxidation catalyst in CO remover 2 of at least one hydrogen generating device 20 that currently performs the first action can be regenerated while the operation of fuel cell 41 is continued.

In the present exemplary embodiment, the first action is started from CO remover 2a installed in hydrogen generating device 20a. Alternatively, the action to regenerate the selective oxidation catalyst of CO remover 2 may be started in any order.

In the present exemplary embodiment, three of hydrogen generating devices 20a, 20b, 20c are installed in hydrogen generating system 31. Alternatively, at least two hydrogen generating devices 20 may be installed in hydrogen generating system 31. When at least two hydrogen generating devices 20 are installed in hydrogen generating system 31, CO remover 2 of at least one hydrogen generating device 20 that currently performs the first action can be regenerated while the operation of fuel cell 41 is continued by the hydrogen-containing gas discharged from CO remover 2 of at least one hydrogen generating device 20 that currently performs the second action, the carbon monoxide concentration being decreased in the hydrogen-containing gas.

In the present exemplary embodiment, the first action is performed one by one. Alternatively, when at least one hydrogen generating device 20 performs the second action (when the hydrogen-containing gas in which carbon monoxide concentration is decreased is sufficiently supplied from hydrogen generating device 20 that performs the second action), the plurality of CO removers 2 that currently perform the first action can be regenerated while the operation of fuel cell 41 is continued.

In the present exemplary embodiment, recycle passages 9a to 9c are directly connected to raw material supply passage 10. Alternatively, recycle passages 9a to 9c may be connected to raw material supply passage 10 after collected in a buffer tank once.

In the case that the hydrogen utilization device is set to fuel cell 41, the hydrogen-containing gas that is discharged from fuel cell 41 without being used for the power generation of fuel cell 41 may be burnt by combustors 3a to 3c.

In the present exemplary embodiment, the hydrogen utilization device is set to fuel cell 41. The hydrogen utilization device is not limited to fuel cell 41, but the hydrogen utilization device may be set to a hydrogen storage tank.

In the present exemplary embodiment, hydrogen generating devices 20a to 20c perform the first action by counting the accumulated time of the hydrogen generating action from the beginning of the transition from the first action to the second action. Alternatively, an accumulation value of the town gases supplied from raw material supply units 5a to 5c is calculated from output and an action time of raw material supply units 5a to 5c, and whether a supply amount of the town gas reaches a predetermined value from the beginning of the transition from the first action to the second action may be determined to start the first action.

### (Second exemplary embodiment)

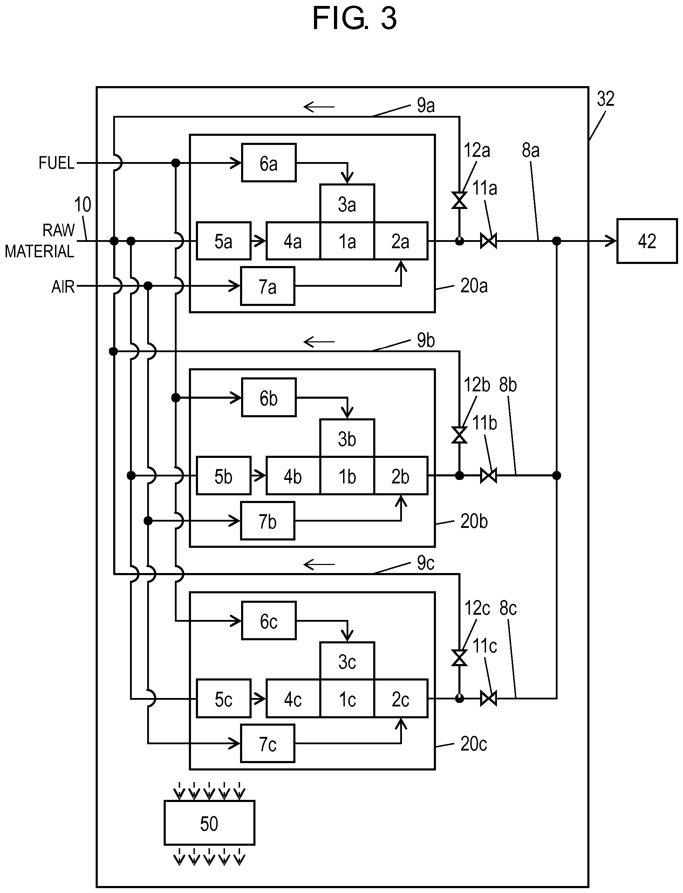

FIG. 3 is a block diagram illustrating a configuration of hydrogen generating system 32 according to a second exemplary embodiment of the present disclosure.

In hydrogen generating system 32 of the second exemplary embodiment in FIG. 3, the same component as hydrogen generating system 31 of the first exemplary embodiment in FIG. 1 is designated by the same reference mark, and the overlapping description will be omitted.

Hydrogen generating system 32 of the second exemplary embodiment in FIG. 3 differs from hydrogen generating system 31 of the first exemplary embodiment in FIG. 1 in that recycle passage sealing valves 12a to 12c are provided in the middles of recycle passages 9a to 9c, respectively, and that hydrogen storage tank 42 is installed instead of fuel cell 41.

In FIG. 3, recycle passage sealing valves 12a to 12c are electromagnetic valves provided in the middles of recycle passages 9a to 9c, respectively. Hydrogen storage tank 42 is a tank that stores the hydrogen-containing gas.

At this point, suffixes of reference marks of these components are identical to those of the first exemplary embodiment, so that the description will be omitted.

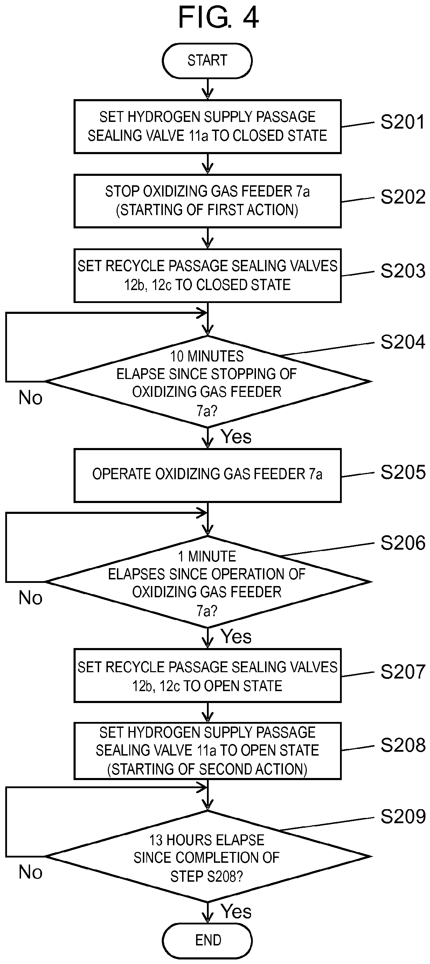

A processing action of hydrogen generating system 32 of the second exemplary embodiment of the present disclosure will be described below with reference to FIG. 4.

FIG. 4 is a flowchart illustrating the processing action of hydrogen generating system 32 according to the second exemplary embodiment of the present disclosure.

Hereinafter, the action to supply the hydrogen-containing gas from reformers 1a to 1c to CO removers 2a to 2c with the supply of air from oxidizing gas feeders 7a to 7c to CO removers 2a to 2c stopped is written as a first action. The action to supply air from oxidizing gas feeders 7a to 7c to CO removers 2a to 2c and to supply the hydrogen-containing gas from reformers 1a to 1c to CO removers 2a to 2c is written as a second action.

When hydrogen generating devices 20a to 20c perform the first action, the selective oxidation catalysts loaded in CO removers 2a to 2c are regenerated by desorbing the poisoning substance from the selective oxidation catalyst by the reduction. Hydrogen generating devices 20a to 20c perform the second action before the first action of hydrogen generating device 20a is started.

In the case that the first action of hydrogen generating device 20a is started, controller 50 first sets hydrogen supply passage sealing valve 11a to the closed state in order to block the supply of the hydrogen-containing gas from CO remover 2a to hydrogen storage tank 42 (step S201). At this point, a whole amount of the hydrogen-containing gas discharged from CO remover 2a is mixed into the town gas flowing in raw material supply passage 10 through recycle passage 9a.

Subsequently, in order to set the inside of CO remover 2a to the reducing atmosphere, controller 50 stops oxidizing gas feeder 7a to block the supply of air to CO remover 2a, thereby starting the first action (step S202).

Subsequently, controller 50 sets recycle passage sealing valves 12b, 12c of recycle passages 9b, 9c to the closed state such that the hydrogen-containing gases discharged from hydrogen generating devices 20b, 20c that continue the second action are not mixed into the town gas flowing in raw material supply passage 10 through recycle passages 9b, 9c (step S203). At this point, the whole amount of the hydrogen-containing gases discharged from CO removers 2b, 2c is supplied to hydrogen storage tank 42 through hydrogen supply passages 8b, 8c.

In step S204, controller 50 counts the time since the stopping of oxidizing gas feeder 7a. When 10 minutes elapse since the stopping of oxidizing gas feeder 7a, the processing action transitions to step S205. Step S204 is repeated until 10 minutes elapse since the stopping of oxidizing gas feeder 7a. As used herein, the term "10 minutes" means the time that is previously obtained in the experimental manner and is necessary for the regeneration of CO remover 2a.

In step S205, controller 50 operates oxidizing gas feeder 7a to restart the supply of air to CO remover 2a, thereby restarting the selective oxidation reaction in CO remover 2a.

In step S206, controller 50 counts the time since the restarting of the action of oxidizing gas feeder 7a. When 1 minute elapses since the restarting of the action of oxidizing gas feeder 7a, the processing action transitions to step S207. Step S206 is repeated until 1 minute elapses since the restarting of the action of oxidizing gas feeder 7a. As used herein, the term "1 minute" means the time that is previously obtained in the experimental manner and is necessary for the sufficient decrease in CO concentration since the starting of the supply of air to CO remover 2a.

Subsequently, controller 50 sets recycle passage sealing valves 12b, 12c of recycle passages 9b, 9c to the open state such that the hydrogen-containing gases discharged from hydrogen generating devices 20b, 20c are mixed into the town gas flowing in raw material supply passage 10 through recycle passages 9b, 9c (step S207).

In step 208, controller 50 sets hydrogen supply passage sealing valve 11a to the open state in order to restart the supply of the hydrogen-containing gas from hydrogen generating device 20a to an inlet side of hydrogen storage tank 42, and the processing action transitions from the first action to the second action (step S208).

Finally, in step S209, controller 50 count the time since the end of step S208. Step S209 is repeated until 13 hours elapse since the end of step S208. As used herein, the term "13 hours" means the time in which three hydrogen generating devices 20 are sequentially set such that the first action is performed at equal intervals with respect to 40 hours that is a continuously operable time of hydrogen generating devices 20, the time being previously acquired in the experimental manner.

Through the above action, the whole hydrogen-containing gas discharged from CO remover 2a of hydrogen generating device 20a that currently performs the first action, the carbon monoxide concentration being not decreased in the hydrogen-containing gas, is mixed into the town gas through recycle passage 9a. At the same time, the hydrogen-containing gases discharged from CO removers 2b, 2c of hydrogen generating devices 20b, 20c that currently perform the second action, the carbon monoxide concentration being decreased in the hydrogen-containing gases, are supplied to hydrogen storage tank 42. Consequently, CO remover 2a of hydrogen generating device 20a that currently performs the first action can be regenerated while the supply of the hydrogen-containing gas to hydrogen storage tank 42 is continued. The whole amount of the hydrogen-containing gases generated by hydrogen generating devices 20b, 20c can be supplied to hydrogen storage tank 42, so that the more hydrogen-containing gas can be used.

Subsequently, controller 50 performs the control such that hydrogen generating device 20b transitions to the first action. The following action from steps S201 to S209 except for steps S203 and S207 is performed on hydrogen generating device 20b. The action in steps S203 and S207 is performed on hydrogen generating devices 20a, 20c.

The action content is identical to the control of causing hydrogen generating device 20a to transition to the first action, so that the description will be omitted. In this case, the reference marks described in the component and step are performed such that "hydrogen supply passage sealing valve 11a" is replaced with "hydrogen supply passage sealing valve 11b", and such that "recycle passage sealing valves 12b, 12c" is replaced with "recycle passage sealing valves 12a, 12c".

Subsequently, controller 50 performs the control such that hydrogen generating device 20c transitions to the first action. The following action from steps S201 to S209 except for steps S203 and S207 is performed on hydrogen generating device 20c. The action in steps S203 and S207 is performed on hydrogen generating devices 20a, 20b.

The action content is identical to the control of causing hydrogen generating device 20a to transition to the first action, so that the description will be omitted. In this case, the reference marks described in the component and step are performed such that "hydrogen supply passage sealing valve 11a" is replaced with "hydrogen supply passage sealing valve 11c", and such that "recycle passage sealing valves 12a, 12c" is replaced with "recycle passage sealing valves 12a, 12b".

As described above, hydrogen generating system 32 of the present exemplary embodiment includes hydrogen generating devices 20a to 20c connected in parallel and controller 50. Hydrogen generating devices 20a to 20c include reformers 1a to 1c that generate the hydrogen-containing gas from the raw material (town gas) and CO removers 2a to 2c that decrease the concentration of carbon monoxide contained in the hydrogen-containing gas by using the selective oxidation catalyst and the oxidizing gas (air). Hydrogen generating devices 20a to 20c include oxidizing gas feeders 7a to 7c that supply the oxidizing gas (air) to CO remover 2a to 2c, hydro-desulfurizers 4a to 4c that remove the sulfur component contained in the raw material (town gas) by a hydrodesulfurization reaction, and raw material supply passage 10 through which the raw material (town gas) is supplied to reformers 1a to 1c through hydro-desulfurizers 4a to 4c. Hydrogen generating devices 20a to 20c include raw material supply units 5a to 5c provided in the middle (upstream of hydro-desulfurizers 4a to 4c) of raw material supply passage 10 and hydrogen supply passages 8a to 8c through which the hydrogen-containing gases discharged from CO removers 2a to 2c are supplied to hydrogen storage tank 42 that is the hydrogen utilization device. Hydrogen generating devices 20a to 20c include recycle passages 9a to 9c that mix at least parts of the hydrogen-containing gases, which are branched in the middles of hydrogen supply passages 8a to 8c and discharged from CO removers 2a to 2c, into the raw material (town gas) before the town gas is branched in hydrogen generating devices 20a to 20c. Hydrogen generating devices 20a to 20c include hydrogen supply passage sealing valves 11a to 11c provided downstream of the branching points of recycle passages 9a to 9c in hydrogen supply passages 8a to 8c and upstream of the confluence of hydrogen supply passages 8a to 8c and recycle passage sealing valves 12a to 12c that open and close recycle passages 9a to 9c on recycle passages 9a to 9c.

While at least one of hydrogen generating devices 20a to 20c performs the first action to supply the hydrogen-containing gas to CO removers 2a to 2c with the supply of the oxidizing gas (air) to CO removers 2a to 2c stopped, controller 50 causes at least another of hydrogen generating devices 20a to 20c to perform the second action to supply the oxidizing gas (air) and the hydrogen-containing gas to CO removers 2a to 2c. Controller 50 closes hydrogen supply passage sealing valves 11a to 11c of hydrogen generating devices 20a to 20c that currently perform the first action, and opens recycle passage sealing valves 12a to 12c that open and close recycle passages 9a to 9c of hydrogen generating devices 20a to 20c that currently perform the first action. Controller 50 mixes the hydrogen-containing gases discharged from CO removers 2a to 2c of hydrogen generating devices 20a to 20c that currently perform the first action, the carbon monoxide concentration being not decreased in the hydrogen-containing gas, into the raw material (town gas) through recycle passages 9a to 9c before the town gas is branched in hydrogen generating devices 20a to 20c. Controller 50 closes recycle passage sealing valves 12a to 12c of hydrogen generating devices 20a to 20c (that currently perform the second action) to which the hydrogen-containing gas is supplied from another of hydrogen generating devices 20a to 20c through recycle passages 9a to 9c. The whole hydrogen-containing gas discharged from hydrogen generating devices 20a to 20c that currently perform the second action, the carbon monoxide concentration being decreased in the hydrogen-containing gas, is supplied to hydrogen storage tank 42 that is the hydrogen utilization device.

Thus, in hydrogen generating system 32 of the present exemplary embodiment, the whole hydrogen-containing gas generated in hydrogen generating devices 20a to 20c that currently perform the second action is supplied to hydrogen storage tank 42 that is the hydrogen utilization device without being mixed into the raw material (town gas) through recycle passages 9a to 9c. For this reason, the more hydrogen-containing gas can be supplied to hydrogen storage tank 42 that is the hydrogen utilization device.

In the present exemplary embodiment, the first action is started from CO remover 2a installed in hydrogen generating device 20a. Alternatively, the action to regenerate the selective oxidation catalyst of CO remover 2 may be started in any order.

In the present exemplary embodiment, three of hydrogen generating devices 20a, 20b, 20c are installed in hydrogen generating system 32. Alternatively, at least two hydrogen generating devices 20 may be installed in hydrogen generating system 32. When at least two hydrogen generating devices 20 are installed in hydrogen generating system 32, CO remover 2 of at least one hydrogen generating device 20 that currently performs the first action can be regenerated while the supply of the hydrogen-containing gas to hydrogen storage tank 42 is continued by the hydrogen-containing gas discharged from CO remover 2 of at least one hydrogen generating device 20 that currently performs the second action, the carbon monoxide concentration being decreased in the hydrogen-containing gas.

In the present exemplary embodiment, the first action is performed one by one. Alternatively, when at least one hydrogen generating device 20 performs the second action (when the hydrogen-containing gas in which carbon monoxide concentration is decreased is sufficiently supplied from hydrogen generating device 20 that performs the second action), the plurality of CO removers 2 that currently perform the first action can be regenerated while the supply of the hydrogen-containing gas to hydrogen storage tank 42 is continued.

### (Third exemplary embodiment)

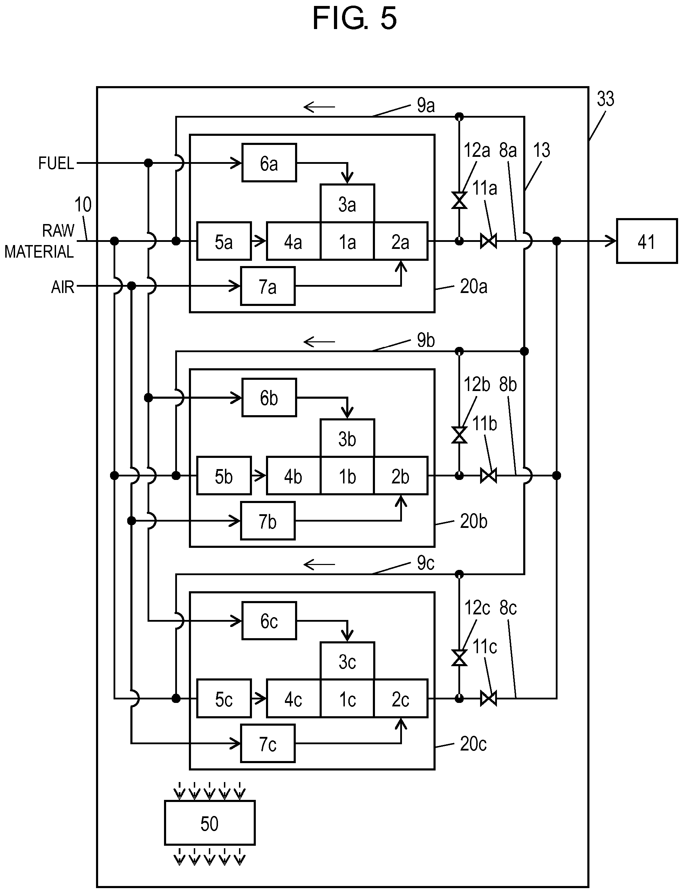

FIG. 5 is a block diagram illustrating a configuration of hydrogen generating system 33 according to a third exemplary embodiment of the present disclosure.

In hydrogen generating system 33 of the third exemplary embodiment in FIG. 5, the same component as hydrogen generating system 31 of the first exemplary embodiment in FIG. 1 or hydrogen generating system 32 of the second exemplary embodiment in FIG. 3 is designated by the same reference mark, and the overlapping description will be omitted.

Hydrogen generating system 33 of the third exemplary embodiment in FIG. 5 differs from hydrogen generating system 31 of the first exemplary embodiment in FIG. 1 in that recycle passages 9a to 9c are connected to raw material supply passage 10 after branched in hydrogen generating devices 20a to 20c. Hydrogen generating system 33 of the third exemplary embodiment in FIG. 5 differs from hydrogen generating system 31 of the first exemplary embodiment in FIG. 1 in that recycle passage sealing valves 12a to 12c are provided in the middles of recycle passages 9a to 9c, and that communication passage 13 that connects recycle passages 9a to 9c to each other is provided downstream of recycle passage sealing valves 12a to 12c.

In FIG. 5, communication passage 13 is a passage that connects recycle passages 9a to 9c to each other downstream of recycle passage sealing valves 12a to 12c.

At this point, suffixes of reference marks of these components are identical to those of the first exemplary embodiment, so that the description will be omitted.

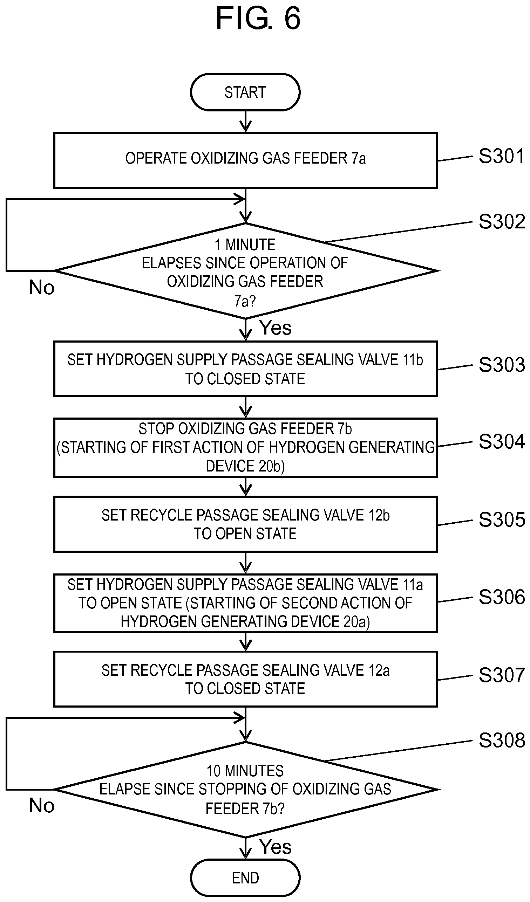

A processing action of hydrogen generating system 33 of the third exemplary embodiment of the present disclosure will be described below with reference to FIG. 6.

FIG. 6 is a flowchart illustrating the processing action of hydrogen generating system 33 according to the third exemplary embodiment of the present disclosure.

Hereinafter, the action to supply the hydrogen-containing gas from reformers 1a to 1c to CO removers 2a to 2c with the supply of air from oxidizing gas feeders 7a to 7c to CO removers 2a to 2c stopped is written as a first action. The action to supply air from oxidizing gas feeders 7a to 7c to CO removers 2a to 2c and to supply the hydrogen-containing gas from reformers 1a to 1c to CO removers 2a to 2c is written as a second action.

When hydrogen generating devices 20a to 20c perform the first action, the selective oxidation catalysts loaded in CO removers 2a to 2c are regenerated by desorbing the poisoning substance from the selective oxidation catalyst by the reduction.

Before the first action of hydrogen generating device 20b is started, hydrogen generating device 20a performs the first action, and hydrogen generating devices 20b, 20c perform the second action. In hydrogen generating device 20b, controller 50 repeats the control of causing hydrogen generating device 20b to transition to the first action every time the accumulated time of the hydrogen generating action reaches 40 hours from the beginning of the transition from the first action to the second action.

In step S301, controller 50 operates oxidizing gas feeder 7a to restart the supply of air to CO remover 2a, thereby restarting the selective oxidation reaction in CO remover 2a.

In step S302, controller 50 counts the time since the restarting of the action of oxidizing gas feeder 7a. When 1 minute elapses since the restarting of the action of oxidizing gas feeder 7a, the processing action transitions to step S303. Step S302 is repeated until 1 minute elapses since the restarting of the action of oxidizing gas feeder 7a. As used herein, the term "1 minute" means the time that is previously obtained in the experimental manner and is necessary for the sufficient decrease in CO concentration since the starting of the supply of air to CO remover 2a.

Controller 50 sets hydrogen supply passage sealing valve 11b to the closed state in order to block the supply of the hydrogen-containing gas from hydrogen generating device 20b to the inlet side of fuel cell 41 (step S303). At this point, the whole amount of hydrogen-containing gases discharged from CO remover 2b is mixed into the town gas flowing in raw material supply passage 10 branched in hydrogen generating devices 20a, 20b, 20c through recycle passage 9b, communication passage 13, and recycle passages 9a, 9c.

In order to set the inside of CO remover 2b to the reducing atmosphere, controller 50 stops oxidizing gas feeder 7b to block the supply of air to CO remover 2b, thereby starting the first action of hydrogen generating device 20b (step S304).

Subsequently, controller 50 sets recycle passage sealing valve 12b to the open state in order to supply the hydrogen-containing gas to recycle passage 9b (step S305).

Next, controller 50 sets hydrogen supply passage sealing valve 11a to the open state in order to restart the supply of the hydrogen-containing gas from hydrogen generating device 20a to the inlet side of fuel cell 41, thereby starting the second action of hydrogen generating device 20a (step S306).

Subsequently, controller 50 sets recycle passage sealing valve 12a to the closed state in order to block the hydrogen-containing gas that is discharged from hydrogen generating device 20a to circulate recycle passage 9a (step S307).

Finally, in step S308, controller 50 counts the time since the stopping of oxidizing gas feeder 7a. When 10 minutes elapse since the stopping of oxidizing gas feeder 7a, the processing action is terminated. Step S308 is repeated until 10 minutes elapse since the stopping of oxidizing gas feeder 7a. As used herein, the term "10 minutes" means time that is previously obtained in the experimental manner and is necessary for the regeneration of CO remover 2.

Through the above action, the whole hydrogen-containing gas discharged from CO remover 2b that currently performs the first action, the carbon monoxide concentration being not decreased in the whole hydrogen-containing gas, is mixed into the town gas through recycle passage 9b. At the same time, the hydrogen-containing gases discharged from CO removers 2a, 2c that currently perform the second action, the carbon monoxide concentration being decreased in the hydrogen-containing gases, are supplied to fuel cell 41. Consequently, CO remover 2b that currently performs the first action can be regenerated while the operation of fuel cell 41 is continued.

The whole amount of the hydrogen-containing gases generated by hydrogen generating devices 20a, 20c can be supplied to fuel cell 41, so that the more hydrogen-containing gas can be used.

Subsequently, controller 50 performs the control such that hydrogen generating device 20c transitions to the first action. The action from steps S303 to S305 and S308 is performed on hydrogen generating device 20c. The action in steps S301, S302, S306, and S307 is performed on hydrogen generating device 20b. The action content is identical to the control of causing hydrogen generating device 20b to transition to the first action, so that the description will be omitted.

Subsequently, controller 50 performs the control such that hydrogen generating device 20a transitions to the first action.

The action from steps S303 to S305 and S308 is performed on hydrogen generating device 20a. The action in steps S301, S302, S306, and S307 is performed on hydrogen generating device 20c. The action content is identical to the control of causing hydrogen generating device 20b to transition to the first action, so that the description will be omitted.

As described above, hydrogen generating system 33 of the present exemplary embodiment includes hydrogen generating devices 20a to 20c connected in parallel and controller 50. Hydrogen generating devices 20a to 20c include reformers 1a to 1c that generate the hydrogen-containing gas from the raw material (town gas), CO removers 2a to 2c that decrease the concentration of carbon monoxide contained in the hydrogen-containing gas by using the selective oxidation catalyst and the oxidizing gas (air), and oxidizing gas feeders 7a to 7c that supply the oxidizing gas (air) to CO removers 2a to 2c. Hydrogen generating devices 20a to 20c include hydro-desulfurizers 4a to 4c that remove the sulfur component contained in the raw material (town gas) by a hydrodesulfurization reaction, raw material supply passage 10 through which the raw material (town gas) is supplied to reformers 1a to 1c through hydro-desulfurizers 4a to 4c, and raw material supply units 5a to 5c provided in the middle (upstream of hydro-desulfurizers 4a to 4c) of raw material supply passage 10. Hydrogen generating devices 20a to 20c include hydrogen supply passages 8a to 8c that supply the hydrogen-containing gases discharged from CO removers 2a to 2c to fuel cell 41 that is the hydrogen utilization device and recycle passages 9a to 9c that mix at least parts of the hydrogen-containing gases, which are branched in the middles of hydrogen supply passages 8a to 8c and discharged from CO removers 2a to 2c, into the raw material (town gas) after being branched in hydrogen generating devices 20a to 20c. Hydrogen generating devices 20a to 20c include hydrogen supply passage sealing valves 11a to 11c provided downstream of the branching points of recycle passages 9a to 9c in hydrogen supply passages 8a to 8c and upstream of the confluence of hydrogen supply passages 8a to 8c and recycle passage sealing valves 12a to 12c that open and close recycle passages 9a to 9c on recycle passages 9a to 9c. Recycle passages 9a to 9c communicate with each other through communication passage 13 downstream of recycle passage sealing valves 12a to 12c.

While at least one of hydrogen generating devices 20a to 20c performs the first action to supply the hydrogen-containing gas to CO removers 2a to 2c with the supply of the oxidizing gas (air) to CO removers 2a to 2c stopped, controller 50 causes at least another of hydrogen generating devices 20a to 20c to perform the second action to supply the oxidizing gas (air) and the hydrogen-containing gas to CO removers 2a to 2c. Controller 50 closes hydrogen supply passage sealing valves 11a to 11c of hydrogen generating devices 20a to 20c that currently perform the first action, and opens recycle passage sealing valves 12a to 12c that open and close recycle passages 9a to 9c of hydrogen generating devices 20a to 20c that currently perform the first action. Controller 50 mixes the hydrogen-containing gas discharged from CO removers 2a to 2c of hydrogen generating devices 20a to 20c that currently perform the first action, the carbon monoxide concentration being not decreased in the hydrogen-containing gas, into the raw material (town gas) through recycle passages 9a to 9c and communication passage 13 after the town gas is branched in hydrogen generating devices 20a to 20c. Controller 50 closes recycle passage sealing valves 12a to 12c of hydrogen generating devices 20a to 20c (that currently perform the second action) to which the hydrogen-containing gas is supplied from another of hydrogen generating devices 20a to 20c through communication passage 13 and recycle passages 9a to 9c. The whole hydrogen-containing gas discharged from hydrogen generating devices 20a to 20c that currently perform the second action, the carbon monoxide concentration being decreased in the hydrogen-containing gas, is supplied to fuel cell 41 that is the hydrogen utilization device.

Thus, in hydrogen generating system 33 of the present exemplary embodiment, the whole hydrogen-containing gas discharged from hydrogen generating devices 20a to 20c that currently perform the second action is supplied to fuel cell 41 that is the hydrogen utilization device without being mixed into the raw material (town gas) through recycle passages 9a to 9c. For this reason, the more hydrogen-containing gas can be supplied to fuel cell 41 that is the hydrogen utilization device.

In the present exemplary embodiment, the first action is started from CO remover 2b installed in hydrogen generating device 20b. Alternatively, the action to regenerate the selective oxidation catalyst of CO remover 2 may be started in any order.

In the present exemplary embodiment, three of hydrogen generating devices 20a, 20b, 20c are installed in hydrogen generating system 33. Alternatively, at least two hydrogen generating devices 20 may be installed in hydrogen generating system 33. When at least two hydrogen generating devices 20 are installed in hydrogen generating system 33, CO remover 2 of at least one hydrogen generating device 20 that currently performs the first action can be regenerated while the operation of fuel cell 41 is continued by the hydrogen-containing gas discharged from CO remover 2 of at least one hydrogen generating device 20 that currently performs the second action, the carbon monoxide concentration being decreased in the hydrogen-containing gas.

In the present exemplary embodiment, the first action is performed one by one. Alternatively, when at least one hydrogen generating device 20 performs the second action (when the hydrogen-containing gas in which carbon monoxide concentration is decreased is sufficiently supplied from hydrogen generating device 20 that performs the second action), the plurality of CO removers 2 that currently perform the first action can be regenerated while the operation of fuel cell 41 is continued.

### (Fourth exemplary embodiment)

A block diagram of a hydrogen generating system according to a fourth exemplary embodiment of the present disclosure is identical to the block diagram of hydrogen generating system 31 of the first exemplary embodiment in FIG. 1, but hydrogen generating system 31 of the fourth exemplary embodiment of the present disclosure differs from hydrogen generating system 31 of the first exemplary embodiment in FIG. 1 in the action.

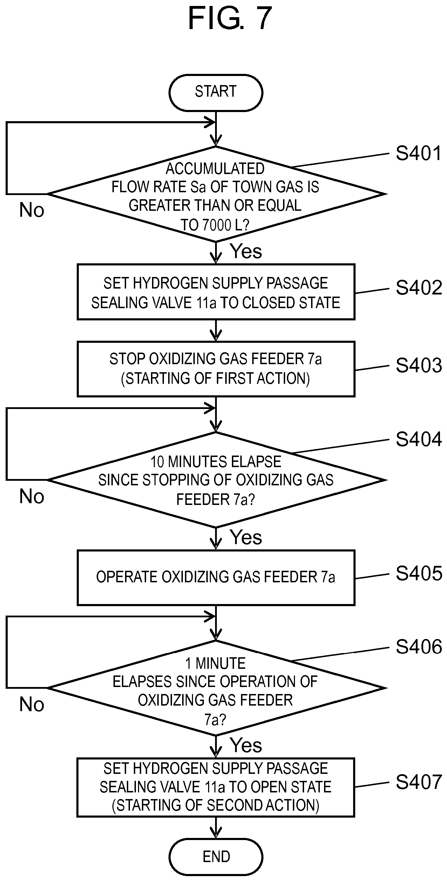

The processing action of hydrogen generating system 31 of the fourth exemplary embodiment of the present disclosure will be described below with reference to FIG. 7.

FIG. 7 is a flowchart illustrating the processing action of the hydrogen generating system according to the fourth exemplary embodiment of the present disclosure.

Hereinafter, the action to supply the hydrogen-containing gas from reformers 1a to 1c to CO removers 2a to 2c with the supply of air from oxidizing gas feeders 7a to 7c to CO removers 2a to 2c stopped is written as a first action. The action to supply air from oxidizing gas feeders 7a to 7c to CO removers 2a to 2c and to supply the hydrogen-containing gas from reformers 1a to 1c to CO removers 2a to 2c is written as a second action.

When hydrogen generating devices 20a to 20c perform the first action, the selective oxidation catalysts loaded in CO removers 2a to 2c are regenerated by desorbing the poisoning substance from the selective oxidation catalyst by the reduction.

Controller 50 counts addition flow rates Sa to Sc of the town gas from the beginning of a time point when CO removers 2a to 2c transition from the first action to the second action at a previous time. The term "addition flow rates Sa to Sc of the town gas" means an addition flow rate of the town gas supplied to hydrogen generating devices 20a to 20c, the addition flow rate being calculated from the flow rate obtained from output of raw material supply units 5a to 5c and operating times of raw material supply units 5a to 5c.

Hydrogen generating devices 20a to 20c perform the second action before the first action of hydrogen generating device 20a is started.

In step S401, the processing action transitions to step S402 when addition flow rate Sa of the town gas becomes greater than or equal to 7000 L. Step S401 is repeated until addition flow rate Sa of the town gas becomes greater than or equal to 7000 L.

As used herein, the term "addition flow rate of 7000 L of the town gas" means an addition flow rate of the town gas that is a continuously operable allowable value acquired previously in the experimental manner, and means the addition flow rate of the town gas at which outlet CO concentrations of CO removers 2a to 2c do not exceed 10 ppm in which power generation performance of fuel cell 41 is decreased due to the performance degradation by ammonia of CO remover 2a to 2c. With increasing town gases supplied from raw material supply unit 5a to 5c, more ammonia is supplied to CO remover 2a to 2c, so that the continuously operable time is shortened.

In hydrogen generating device 20a, controller 50 repeats the control of causing hydrogen generating device 20a to transition to the first action every time addition flow rate Sa of the town gas supplied from raw material supply unit 5a reaches 7000 L from the beginning of the transition from the first action to the second action.

When hydrogen generating device 20a performs the first action, the selective oxidation catalyst loaded in CO remover 2a is regenerated by desorbing the poisoning substance from the selective oxidation catalyst by the reduction. On the other hand, hydrogen generating devices 20b, 20c continue the second action.

In order to start the first action of hydrogen generating device 20a, controller 50 sets hydrogen supply passage sealing valve 11a to the closed state in order to block the supply of the hydrogen-containing gas to fuel cell 41 (step S402). At this point, a whole amount of the hydrogen-containing gas discharged from CO remover 2a is mixed into the town gas flowing in raw material supply passage 10 through recycle passage 9a.

In order to set the inside of CO remover 2a to the reducing atmosphere, controller 50 stops oxidizing gas feeder 7a to block the supply of air to CO remover 2a, thereby starting the first action (step S403).

In step S404, controller 50 counts the time since the stopping of oxidizing gas feeder 7a. When 10 minutes elapse since the stopping of oxidizing gas feeder 7a, the processing action transitions to step S405. Step S404 is repeated until 10 minutes elapse since the stopping of oxidizing gas feeder 7a. As used herein, the term "10 minutes" means the time that is previously obtained in the experimental manner and is necessary for the regeneration of CO remover 2a.

In step S405, controller 50 operates oxidizing gas feeder 7a to restart the supply of air to CO remover 2a, thereby restarting the selective oxidation reaction in CO remover 2a.

In step S406, controller 50 counts the time since the restarting of the action of oxidizing gas feeder 7a. When 1 minute elapses since the restarting of the action of oxidizing gas feeder 7a, the processing action transitions to step S407. Step S406 is repeated until 1 minute elapses since the restarting of the action of oxidizing gas feeder 7a. As used herein, the term "1 minute" means the time that is previously obtained in the experimental manner and is necessary for the sufficient decrease in CO concentration since the starting of the supply of air to CO remover 2a.

Finally controller 50 sets hydrogen supply passage sealing valve 11a to an open state in order to restart the supply of the hydrogen-containing gas to fuel cell 41, and the processing action transitions from the first action to the second action (step S407).

Through the above action, the whole hydrogen-containing gas discharged from CO remover 2a that currently performs the first action, the carbon monoxide concentration being not decreased in the whole hydrogen-containing gas, is mixed into the town gas through recycle passage 9a. At the same time, the hydrogen-containing gases discharged from CO removers 2b, 2c that currently perform the second action, the carbon monoxide concentration being decreased in the hydrogen-containing gases, are supplied to fuel cell 41. Thus, CO remover 2a that performs the first action can be regenerated while the operation of fuel cell 41 is continued.

Subsequently, controller 50 performs the control such that hydrogen generating device 20b transitions to the first action. The action from steps S401 to S407 is performed on hydrogen generating device 20b. The action content is identical to that of hydrogen generating device 20a, so that the description will be omitted. In this case, the reference marks described in the component and step are performed such that a suffix of "hydrogen supply passage sealing valve 11a" is replaced with a suffix of "hydrogen supply passage sealing valve 11b", for example.

Subsequently, controller 50 performs the control such that hydrogen generating device 20c transitions to the first action. The action from steps S401 to S407 is performed on hydrogen generating device 20c. The action content is identical to that of hydrogen generating device 20a, so that the description will be omitted. In this case, the reference marks described in the component and step are performed such that the suffix of "hydrogen supply passage sealing valve 11a" is replaced with the suffix of "hydrogen supply passage sealing valve 11c", for example.

As described above, in the present exemplary embodiment, the whole hydrogen-containing gas discharged from CO remover 2 that currently performs the first action, the carbon monoxide concentration being not decreased in the whole hydrogen-containing gas, is mixed into the town gas through recycle passage 9. At the same time, the hydrogen-containing gas discharged from CO remover 2 that currently performs the second action, the carbon monoxide concentration being decreased in the hydrogen-containing gas, is supplied to fuel cell 41. Thus, CO remover 2 that performs the first action can be regenerated while the operation of fuel cell 41 is continued.

It is clear from the above description of the first to fourth exemplary embodiments that those skilled in the art can make modifications and other exemplary embodiments of the present disclosure. Thus, the above description should be interpreted as only illustration, and is intended to teach the best mode carrying out the present disclosure to those skilled in the art.

### (Fifth exemplary embodiment)

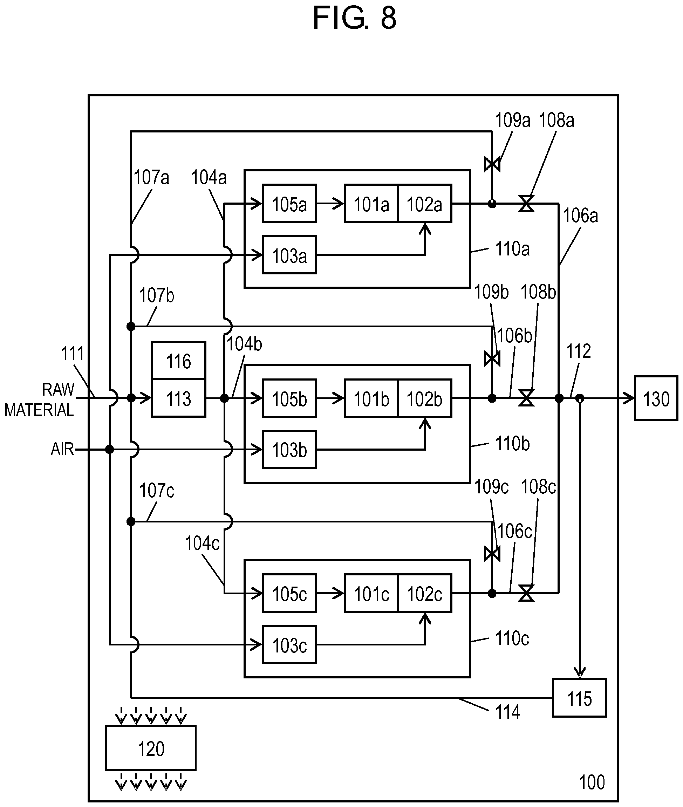

FIG. 8 is a block diagram illustrating a configuration of hydrogen generating system 100 according to a fifth exemplary embodiment of the present disclosure.

As illustrated in FIG. 8, hydrogen generating system 100 of the fifth exemplary embodiment includes a plurality (three) of hydrogen generating devices 110a to 110c connected in parallel, raw material supply main passage 111 through which the raw material is supplied to the plurality (three) of hydrogen generating devices 110a to 110c, and hydrogen supply main passage 112 through which the hydrogen-containing gases generated by the plurality (three) of hydrogen generating devices 110a to 110c are supplied to fuel cell 130 that is the hydrogen utilization device. Hydrogen generating system 100 includes hydro-desulfurizer 113 that is provided in raw material supply main passage 111 to remove a sulfur compound in the raw material by using the hydrodesulfurization catalyst and the hydrogen-containing gas, hydro-desulfurizer 113 being filled with the hydrodesulfurization catalyst, and first recycle gas supply passage 114 through which part of the hydrogen-containing gas flowing in hydrogen supply main passage 112 is supplied to raw material supply main passage 111 upstream of hydro-desulfurizer 113. Hydrogen generating system 100 includes recycle gas flow rate regulator 115 that is provided in first recycle gas supply passage 114 to regulate the flow rate of the hydrogen-containing gas flowing in first recycle gas supply passage 114, and controller 120.

Hydrogen generating devices 110a to 110c include reformers 101a to 101c that generate the hydrogen-containing gas from the raw material, CO removers 102a to 102c that decrease the concentration of carbon monoxide contained in the hydrogen-containing gases generated by reformer 101a to 101c by using the oxidation catalyst and the oxidizing gas, CO remover 102a to 102c having the oxidation catalyst, and oxidizing gas feeders 103a to 103c that supply the oxidizing gas to CO removers 102a to 102c. Hydrogen generating devices 110a to 110c include raw material supply branch passages 104a to 104c through which the raw material in which the sulfur compound is removed by hydro-desulfurizer 113 branched from raw material supply main passage 111 is supplied to reformers 101a to 101c and raw material supply units 105a to 105c that are provided in raw material supply branch passages 104a to 104c to supply the raw material in which the sulfur compound is removed by hydro-desulfurizer 113 to reformers 101a to 101c. Hydrogen generating devices 110a to 110c include hydrogen supply branch passages 106a to 106c that merge the hydrogen-containing gases discharged from CO removers 102a to 102c into hydrogen supply main passage 112. Hydrogen generating devices 110a to 110c includes second recycle gas supply passages 107a to 107c that are branched from the middles of hydrogen supply branch passages 106a to 106c to supply the hydrogen-containing gases discharged from CO removers 102a to 102c to raw material supply main passage 111 upstream of hydro-desulfurizer 113. Hydrogen generating devices 110a to 110c include hydrogen supply branch passage on-off valves 108a to 108c that are provided downstream of the branching points of second recycle gas supply passages 107a to 107c in hydrogen supply branch passages 106a to 106c to open and close hydrogen supply branch passages 106a to 106c and second recycle gas supply passage on-off valves 109a to 109c that are provided in second recycle gas supply passages 107a to 107c to open and close second recycle gas supply passages 107a to 107c.

The alphabetical characters (a, b, c) added to the reference marks of these components will be described with reformers 101a to 101c as an example. The reference mark of 1a indicates a first reformer, the reference mark of 1b indicates a second reformer, and the reference mark of 1c indicates a third reformer. Thus, the description of reformers 101a to 101c designates three reformers of the first to third reformers. On the other hand, sometimes the description is made while the alphabetical characters (a, b, c) added to the reference marks are omitted. The case that the description is made as reformer 101 designates an unspecified reformer that is one of reformers 101a to 101c.

In the present exemplary embodiment, the town gas is used as the raw material, and air is used as the oxidizing gas. The reforming catalyst (not illustrated) is loaded in reformers 101a to 101c. In the present exemplary embodiment, the ruthenium catalyst is used as the reforming catalyst. The oxidation catalyst (not illustrated) is loaded in CO removers 102a to 102c. In the present exemplary embodiment, the ruthenium catalyst is used as the oxidation catalyst.

Oxidizing gas feeders 103a to 103c are pumps that supply air that is the oxidizing gas to CO removers 102a to 102c, respectively. Raw material supply units 105a to 105c are pumps that supply the town gas that is the raw material to reformer 101a to 101c, respectively.

Hydro-desulfurizer 113 removes the sulfur component contained in the town gas after causing the sulfur component to react with hydrogen to generate hydrogen sulfide. The hydrodesulfurization catalyst (not illustrated) is loaded in hydro-desulfurizer 113. In the present exemplary embodiment, a copper-zinc based catalyst is used as the hydrodesulfurization catalyst.

Recycle gas flow rate regulator 115 is a mass flow controller provided in the middle of first recycle gas supply passage 114. Heater 116 heats hydro-desulfurizer 113 such that the hydrodesulfurization catalyst becomes a temperature suitable for the hydrodesulfurization reaction.

The action and effect of hydrogen generating system 100 of the present exemplary embodiment having the above configuration will be described below.

During the operation of hydrogen generating system 100, raw material supply units 105a to 105c are operated to supply the town gas to hydro-desulfurizer 113. The raw material in which the sulfur compound is removed by hydro-desulfurizer 113 is reformed into the hydrogen-containing gas by reformers 101a to 101c, and the hydrogen-containing gas is condensed through CO removers 102a to 102c and hydrogen supply branch passages 106a to 106c, respectively, in hydrogen supply main passage 112 upstream of fuel cell 130.

Parts of the hydrogen-containing gases discharged from CO removers 102a to 102c are merged into raw material supply main passage 111 through first recycle gas supply passage 114 branched from hydrogen supply main passage 112 by recycle gas flow rate regulator 115, and supplied to hydro-desulfurizer 113.

Hereinafter, in hydrogen generating device 110a to 110c, the action to supply the hydrogen-containing gas from reformers 101a to 101c to CO removers 102a to 102c with the supply of air from oxidizing gas feeders 103a to 103c to CO removers 102a to 102c stopped is written as first action. The action to supply air from oxidizing gas feeder 103a to 103c to CO removers 102a to 102c and to supply the hydrogen-containing gas from reformers 101a to 10c to CO removers 102a to 102c is written as second action.

When hydrogen generating devices 110a to 110c perform the second action, carbon monoxide contained in the hydrogen-containing gases generated by reformers 101a to 101c is decreased to about 10 ppm by the oxidation catalysts loaded in CO removers 102a to 102c and air supplied from oxidizing gas feeder 103a to 103c. On the other hand, when hydrogen generating devices 110a to 110c perform the first action, the oxidation catalysts loaded in CO removers 102a to 102c are regenerated by desorbing the poisoning substance from the oxidation catalysts by the reduction.

Hydrogen generating device 110a to 110c usually perform the second action to discharge the hydrogen-containing gas in which the carbon monoxide concentration is decreased from CO removers 102a to 102c. During the second action, second recycle gas supply passage on-off valve 109a to 109c are closed, hydrogen supply branch passage on-off valve 108a to 108c are open, and the hydrogen-containing gas in which the carbon monoxide concentration is sufficiently decreased is supplied to post-stage fuel cell 130. Part of the hydrogen-containing gas in which the carbon monoxide concentration is sufficiently decreased is supplied to hydro-desulfurizer 113 through first recycle gas supply passage 114 by recycle gas flow rate regulator 115.

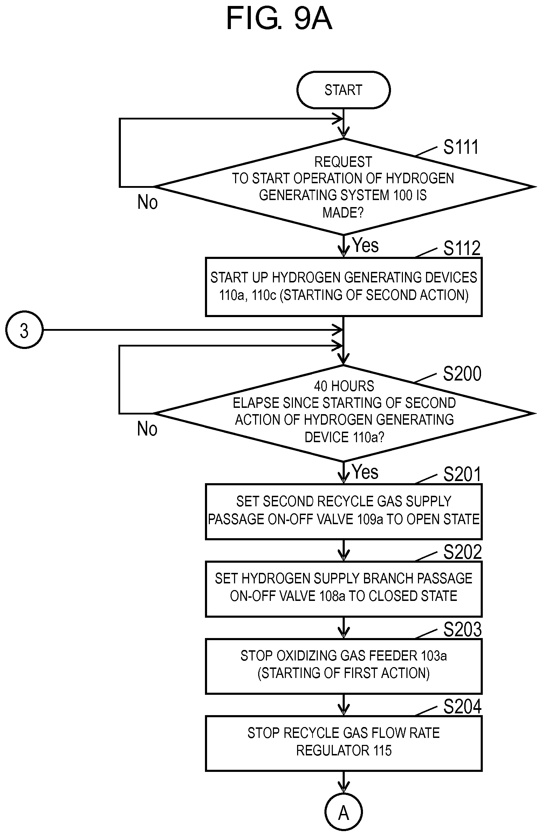

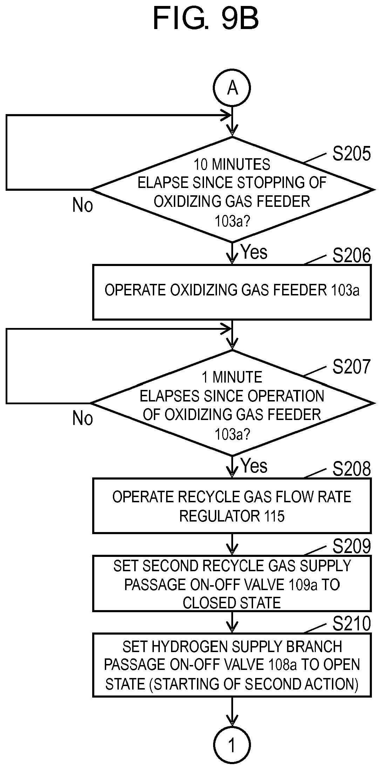

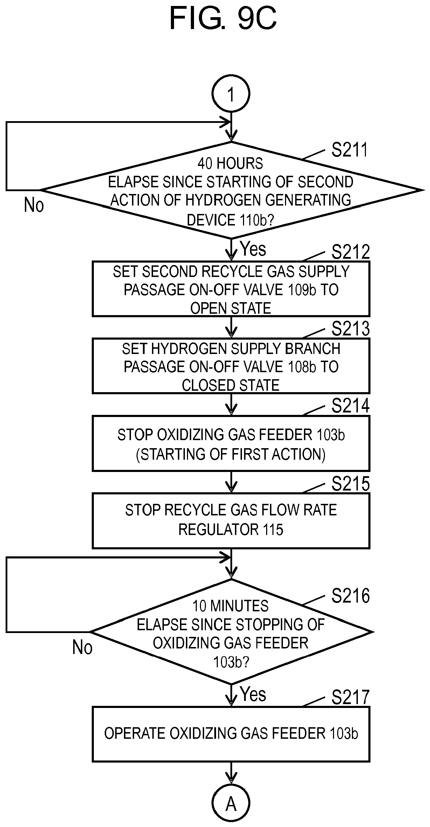

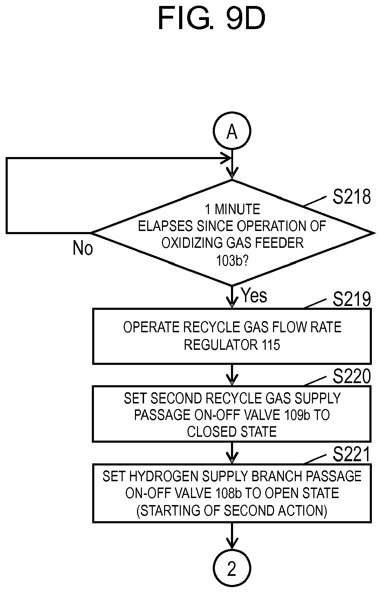

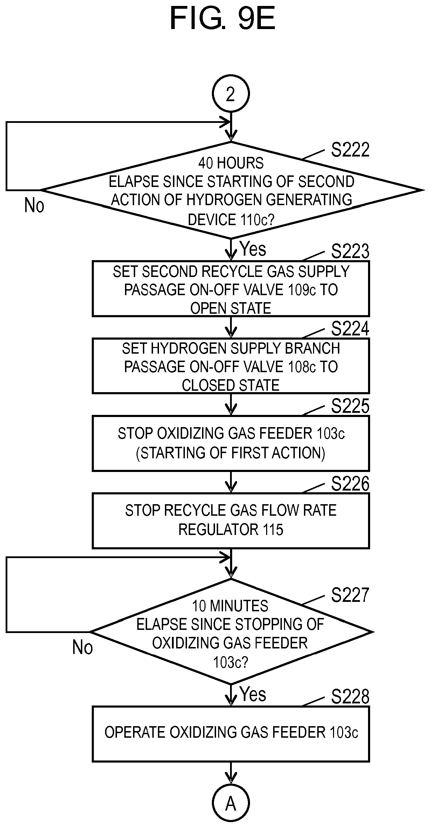

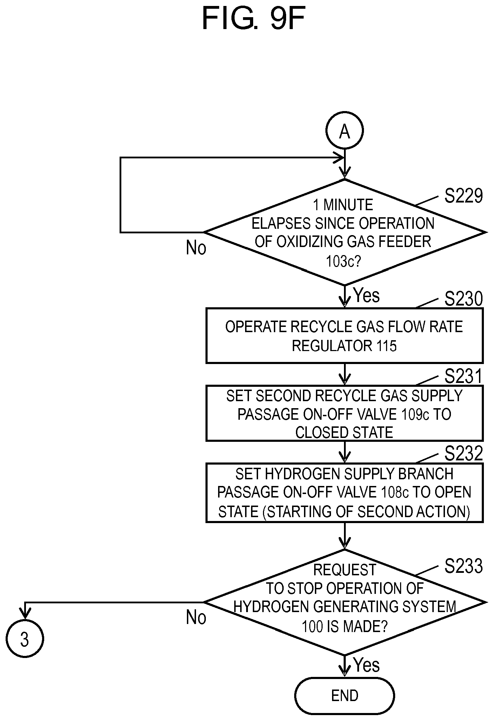

The action of hydrogen generating system 100 of the present exemplary embodiment will be described below with reference to FIGS. 9A to 9F.

FIGS. 9A to 9F are views in which a flowchart illustrating the action of hydrogen generating system 100 of the present exemplary embodiment is divided into six.

When a request to start the operation of hydrogen generating system 100 is made (step S111), hydrogen generating device 110a to 110c are started up to perform the second action (step S112).

In the following action, at first hydrogen generating device 110a performs the first action in order to regenerate the oxidation catalyst of CO remover 102a. Even if hydrogen generating device 110a performs the first action, hydrogen generating devices 110b, 110c continue the second action.

Controller 120 stands by until 40 hours elapse since hydrogen generating device 110a starts the second action. When 40 hours elapse since hydrogen generating device 110a starts the second action (step S200), controller 120 starts the control of causing hydrogen generating device 110a to transition to the first action.

As used herein, the term "40 hours" means a continuously operable time obtained previously in the experimental manner, and means time in which time necessary for the regeneration of the oxidation catalyst of CO remover 102a by the first action of hydrogen generating device 110a is subtracted from the longest time in which the outlet CO concentration of CO remover 102a does not exceed 10 ppm at which the power generation performance of fuel cell 130 is decreased due to the performance degradation of CO remover 102a by ammonia.

In order to cause hydrogen generating device 110a to start the first action with respect to CO remover 102a, at first controller 120 sets second recycle gas supply passage on-off valve 109a to the open state (step S201), and sets hydrogen supply branch passage on-off valve 108a to the closed state (step S202). At this point, the whole amount of the hydrogen-containing gases discharged from CO remover 102a is supplied to the town gas flowing in raw material supply main passage 111 located upstream of hydro-desulfurizer 113 through second recycle gas supply passage 107a.

Subsequently, in order to set the inside of CO remover 102a to the reducing atmosphere, controller 120 stops oxidizing gas feeder 103a to block the supply of air to CO remover 102a, thereby starting the first action (step S203). Subsequently, controller 120 stops recycle gas flow rate regulator 115 (step S204).

In step S205, controller 120 counts an elapsed time since the stopping of oxidizing gas feeder 103a. When 10 minutes elapse since the stopping of oxidizing gas feeder 103a, the action transitions to step S206. Step S205 is repeated until 10 minutes elapse since the stopping of oxidizing gas feeder 103a. As used herein, the term "10 minutes" means the time that is previously obtained in the experimental manner and is necessary for the regeneration of the oxidation catalyst of CO remover 102a.

In step S206, controller 120 operates oxidizing gas feeder 103a to restart the supply of air to CO remover 102a, thereby restarting the oxidation reaction in CO remover 102a.

In step S207, controller 120 counts an elapsed time since the restarting of the action of oxidizing gas feeder 103a. When 1 minute elapses since the restarting of the action of oxidizing gas feeder 103a, the action transitions to step S208. Step S207 is repeated until 1 minute elapses since the restarting of the action of oxidizing gas feeder 103a. As used herein, the term "1 minute" means the time that is previously obtained in the experimental manner and is necessary for the sufficient decrease in CO concentration since the starting of the supply of air to CO remover 102a.

Subsequently, controller 120 operates recycle gas flow rate regulator 115 (step S208), and sets second recycle gas supply passage on-off valve 109a to the closed state (step S209). At this point, parts of the hydrogen-containing gases discharged from CO removers 102a to 102c are supplied to the town gas flowing in raw material supply main passage 111 through first recycle gas supply passage 114.

Subsequently, controller 120 sets hydrogen supply branch passage on-off valve 108a to the open state, and hydrogen generating device 110a transitions from the first action to the second action (step S210).

When the elapsed time since hydrogen generating device 110b starts the second action is greater than or equal to 40 hours, hydrogen generating device 110b is controlled so as to transition to the first action. At this point, hydrogen generating device 110a and hydrogen generating device 110c continue the second action.

In this case, the action contents (steps S211 to S221) are identical to the control (steps S200 to S210) of causing hydrogen generating device 110a to transition to the first action, and the reference marks described in the component and step are performed such that the suffix of "hydrogen supply branch passage on-off valve 108a" is replaced with the suffix of "hydrogen supply branch passage on-off valve 108b", so that the description will be omitted.

When the elapsed time since hydrogen generating device 110c starts the second action is greater than or equal to 40 hours, hydrogen generating device 110c is controlled so as to transition to the first action. At this point, hydrogen generating device 110a and hydrogen generating device 110b continue the second action.

The action contents (steps S222 to S232) are identical to the control (steps S200 to S210) of causing hydrogen generating device 110a to transition to the first action, and the reference marks described in the component and step are performed such that the suffix of "hydrogen supply branch passage on-off valve 108a" is replaced with the suffix of "hydrogen supply branch passage on-off valve 108c", so that the description will be omitted.

When a request to stop the operation of hydrogen generating system 100 is made (step S233), controller 120 stops the operation of hydrogen generating system 100. On the other hand, steps S200 to S232 are repeated until the request to stop the operation of hydrogen generating system 100 is made.

Through the above action, when hydrogen generating device 110a performs the first action, the whole hydrogen-containing gas discharged from CO remover 102a, the carbon monoxide concentration being not decreased in the hydrogen-containing gas, is mixed into the town gas flowing in raw material supply main passage upstream of hydro-desulfurizer 113 through second recycle gas supply passage 107a. At the same time, the whole amount of hydrogen-containing gases discharged from hydrogen generating devices 110b, 110c that currently perform the second action, the carbon monoxide concentration being decreased in the hydrogen-containing gases, is supplied to fuel cell 130. Consequently, the oxidation catalyst in CO remover 102a of hydrogen generating device 110a that currently performs the first action can be regenerated while the supply of the hydrogen-containing gas to fuel cell 130 is continued.

The whole amount of hydrogen-containing gases generated in hydrogen generating devices 110b, 110c, the carbon monoxide concentration being decreased in the hydrogen-containing gases, can be supplied to fuel cell 130. For this reason, the more hydrogen-containing gas can be used.

The similar effect is obtained even if hydrogen generating devices 110b, 110c perform the first action.

As described above, in the present exemplary embodiment, the whole hydrogen-containing gas discharged from CO remover 102 of hydrogen generating device 110 that currently performs the first action, the carbon monoxide concentration being not decreased in the hydrogen-containing gas, is mixed into the town gas flowing in raw material supply main passage upstream of hydro-desulfurizer 113 through second recycle gas supply passage 107. At the same time, the whole amount of hydrogen-containing gases discharged from CO remover 102 of hydrogen generating device 110 that currently performs the second action, the carbon monoxide concentration being decreased in the hydrogen-containing gas, is supplied to fuel cell 130. Consequently, the oxidation catalyst in CO remover 102 of hydrogen generating device 110 that currently performs the first action can be regenerated while the operation of fuel cell 130 is continued.

Irrespective of the first action and the second action of hydrogen generating device 110, the flow rate of the recycle gas supplied to hydro-desulfurizer 113 can be regulated by the action of recycle gas flow rate regulator 115. For this reason, it is not necessary for hydrogen generating devices 110a to 110c to have a function of regulating the flow rate of the recycle gas, and hydrogen generating system 100 can be constructed at low cost.

In the present exemplary embodiment, the regeneration of the oxidation catalyst by the first action is started from CO remover 102a installed in hydrogen generating device 110. Alternatively, the action to regenerate the oxidation catalyst of CO remover 102 may be started in any order.

In the present exemplary embodiment, three of hydrogen generating devices 110a, 110b, 110c are installed in hydrogen generating system 100. Alternatively, at least two hydrogen generating devices 110 may be installed in hydrogen generating system 100. When at least two hydrogen generating devices 110 are installed in hydrogen generating system 100, the oxidation catalyst in CO remover 102 of hydrogen generating device 110 that currently performs the first action can be regenerated while the operation of fuel cell 130 is continued.

However, in the case that two hydrogen generating devices 110 are installed in hydrogen generating system 100, one of hydrogen generating devices 110 can perform the first action only in the case that the other of hydrogen generating devices 110 currently performs the second action, but two hydrogen generating devices 110 cannot simultaneously perform the first action.

In the present exemplary embodiment, timing at which hydrogen generating device 110 starts the first action is set to the elapsed time of 40 hours since the starting of the second action of hydrogen generating device 110, the elapsed time of 40 hours being obtained in the experimental manner. For more safety, the timing may be set to the continuously operation time (for example, 30 hours) that reaches a predetermined time value since the starting of the second action of hydrogen generating device 110.

In the present exemplary embodiment, the first action of hydrogen generating device 110 is performed one by one. In the case that at least three hydrogen generating devices 110 are installed in hydrogen generating system 100, at least one of hydrogen generating devices 110 performs the second action during the first action of another hydrogen generating device 110. Under this condition, even if the plurality of hydrogen generating devices 110 overlap each other in the time hydrogen generating device 110 performs the first action, CO remover 102 of hydrogen generating device 110 that currently performs the first action can be regenerated while the operation of fuel cell 130 is continued.

In the present exemplary embodiment, first recycle gas supply passage 114 and second recycle gas supply passages 107a to 107c are directly connected to raw material supply main passage 111. Alternatively, first recycle gas supply passage 114 and second recycle gas supply passages 107a to 107c may be connected to raw material supply main passage 111 after collected to the buffer tank.

In the present exemplary embodiment, the hydrogen utilization device is fuel cell 130. Alternatively, the hydrogen utilization device may be a hydrogen storage tank.

In the present exemplary embodiment, hydrogen generating devices 110a to 110c perform the first action by counting the accumulated time of the hydrogen generating action from the beginning of the transition from the first action to the second action. Alternatively, an accumulation value of the town gases supplied from raw material supply units 105a to 105c is calculated from output and an action time of raw material supply units 105a to 105c, and whether a supply amount of the town gas reaches a predetermined value from the beginning of the transition from the first action to the second action may be determined to start the first action.

### (Sixth exemplary embodiment)

A block diagram illustrating a configuration of hydrogen generating system 100 according to a sixth exemplary embodiment of the present disclosure is identical to the block diagram of hydrogen generating system 100 of the fifth exemplary embodiment in FIG. 8, and the component of hydrogen generating system 100 of the sixth exemplary embodiment is designated by the same reference mark as hydrogen generating system 100 of the fifth exemplary embodiment.

Hydrogen generating system 100 of the sixth exemplary embodiment differs from hydrogen generating system 100 of the fifth exemplary embodiment in part of the action.

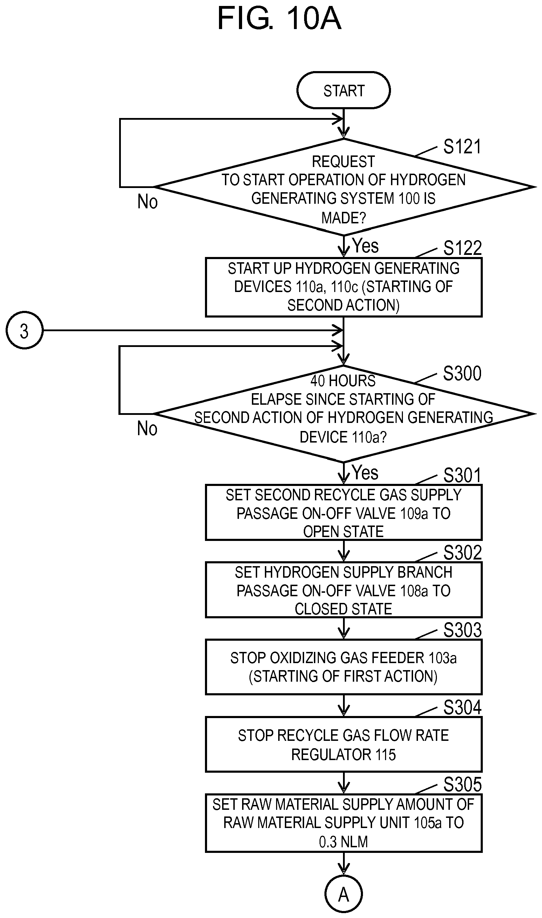

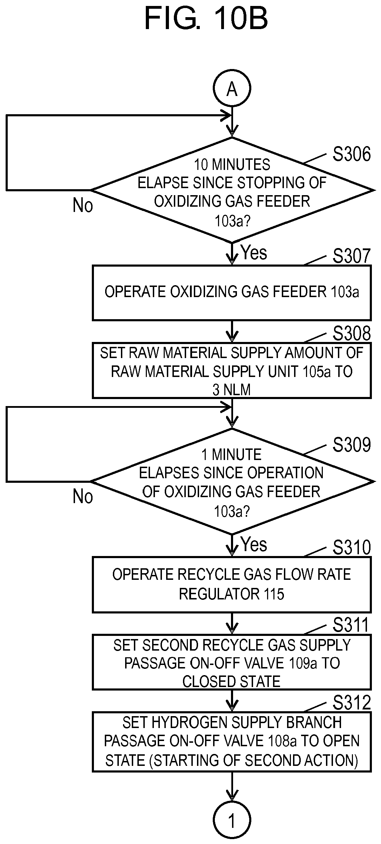

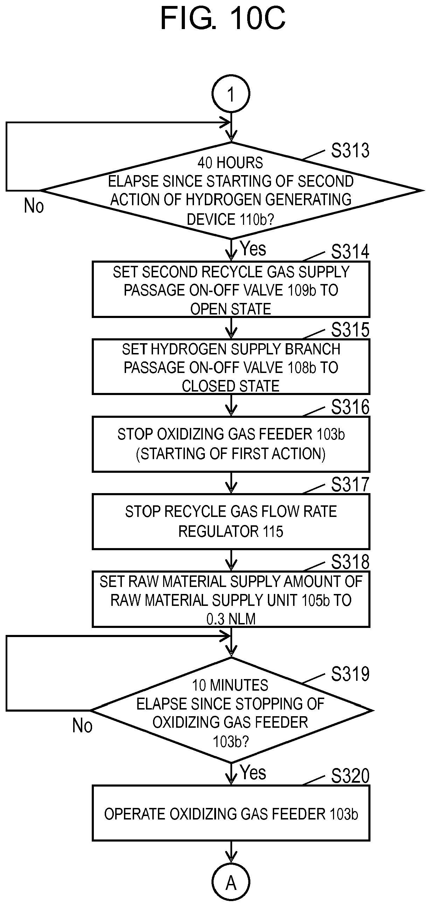

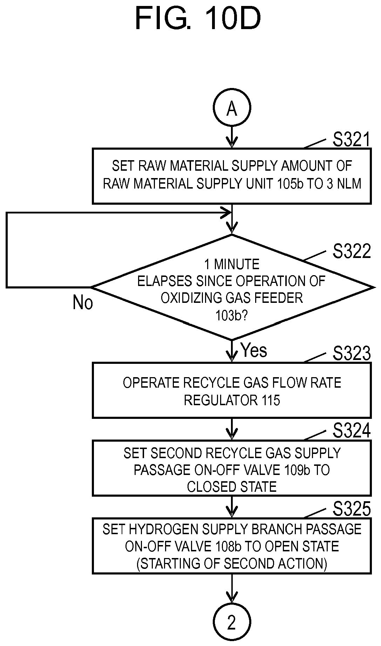

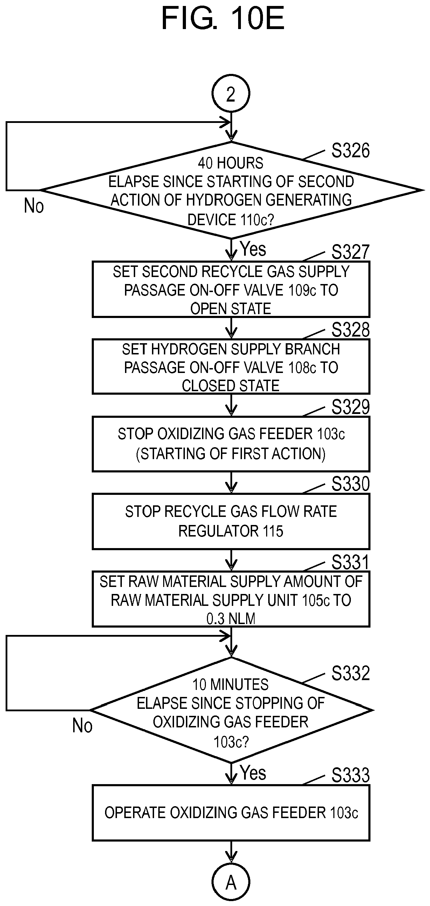

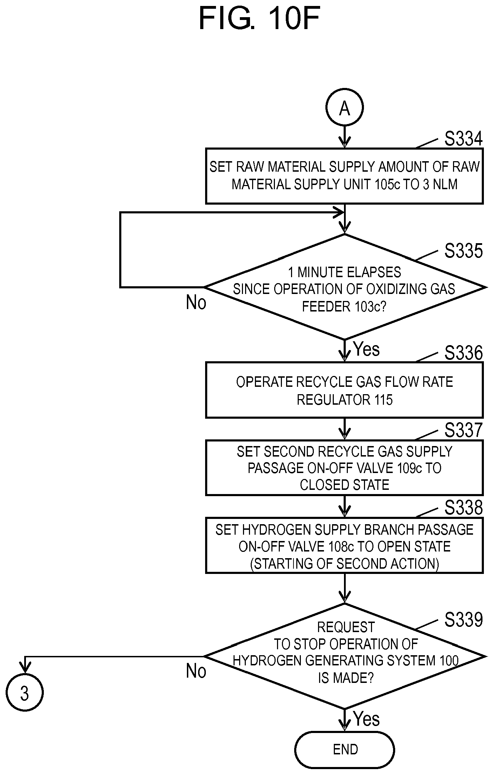

The action of hydrogen generating system 100 of the sixth exemplary embodiment of the present disclosure will be described below with reference to FIGS. 10A to 10F.

FIGS. 10A to 10F are views in which a flowchart illustrating the action of hydrogen generating system 100 of the sixth exemplary embodiment of the present disclosure is divided into six.

When the request to start the operation of hydrogen generating system 100 is made (step S121), hydrogen generating device 110a to 110c are started up to perform the second action (step S122).

In the following action, at first hydrogen generating device 110a performs the first action in order to regenerate the oxidation catalyst of CO remover 102a. Even if hydrogen generating device 110a performs the first action, hydrogen generating devices 110b, 110c continue the second action.

Controller 120 stands by until 40 hours elapse since hydrogen generating device 110a starts the second action. When 40 hours elapse since hydrogen generating device 110a starts the second action (step S300), controller 120 starts the control of causing hydrogen generating device 110a to transition to the first action.

In order to cause hydrogen generating device 110a to start the first action with respect to CO remover 102a, at first controller 120 sets second recycle gas supply passage on-off valve 109a to the open state (step S301), and sets hydrogen supply branch passage on-off valve 108a to the closed state (step S302). At this point, the whole amount of the hydrogen-containing gases discharged from CO remover 102a is supplied to the town gas flowing in raw material supply main passage 111 located upstream of hydro-desulfurizer 113 through second recycle gas supply passage 107a.

Subsequently, in order to set the inside of CO remover 102a to the reducing atmosphere, controller 120 stops oxidizing gas feeder 103a to block the supply of air to CO remover 102a, thereby starting the first action (step S303). Subsequently, controller 120 stops recycle gas flow rate regulator 115 (step S304).

Subsequently, controller 120 sets a raw material supply amount of raw material supply unit 105a to 0.3 NLM (step S305). As used herein, the term "0.3 NLM" means a raw material supply amount in which a hydrogen amount necessary for the hydrodesulfurization catalyst loaded in hydro-desulfurizer 113 previously obtained in the experimental manner to perform the hydrodesulfurization of the sulfur compound in the raw material is obtained.

In step S306, controller 120 counts an elapsed time since the stopping of oxidizing gas feeder 103a. When 10 minutes elapse since the stopping of oxidizing gas feeder 103a, the action transitions to step S307. Step S306 is repeated until 10 minutes elapse since the stopping of oxidizing gas feeder 103a. As used herein, the term "10 minutes" means the time that is previously obtained in the experimental manner and is necessary for the regeneration of the oxidation catalyst of CO remover 102a.

In step S307, controller 120 operates oxidizing gas feeder 103a to restart the supply of air to CO remover 102a, thereby restarting the oxidation reaction in CO remover 102a.

Subsequently, controller 120 sets the raw material supply amount of raw material supply unit 105a to 3 NLM (step S308). As used herein, the term "3 NLM" means a raw material supply amount necessary for rated operation of hydrogen generating device 110a, the raw material supply amount being previously obtained in the experimental manner.

In step S309, controller 120 counts an elapsed time since the restarting of the action of oxidizing gas feeder 103a. When 1 minute elapses since the restarting of the action of oxidizing gas feeder 103a, the action transitions to step 310. Step S309 is repeated until 1 minute elapses since the restarting of the action of oxidizing gas feeder 103a. As used herein, the term "1 minute" means the time that is previously obtained in the experimental manner and is necessary for the sufficient decrease in CO concentration since the starting of the supply of air to CO remover 102a.

Subsequently, controller 120 operates recycle gas flow rate regulator 115 (step S310), and sets second recycle gas supply passage on-off valve 109a to the closed state (step S311). At this point, parts of the hydrogen-containing gases discharged from CO removers 102a to 102c are supplied to the town gas flowing in raw material supply main passage 111 located upstream of hydro-desulfurizer 113 through first recycle gas supply passage 114.

Subsequently, controller 120 sets hydrogen supply branch passage on-off valve 108a to the open state, and hydrogen generating device 110a transitions from the first action to the second action (step S312).

When the elapsed time since hydrogen generating device 110b starts the second action is greater than or equal to 40 hours, controller 120 controls hydrogen generating device 110b such that hydrogen generating device 110b transitions to the first action. At this point, hydrogen generating device 110a and hydrogen generating device 110c continue the second action.

The action contents (steps S313 to S325) are identical to the control (steps S300 to S312) of causing hydrogen generating device 110a to transition to the first action, and the reference marks described in the component and step are performed such that the suffix of "hydrogen supply branch passage on-off valve 108a" is replaced with the suffix of "hydrogen supply branch passage on-off valve 108b", so that the description will be omitted.

When the elapsed time since hydrogen generating device 110c starts the second action is greater than or equal to 40 hours, hydrogen generating device 110c is controlled so as to transition to the first action. At this point, hydrogen generating devices 110a, 110b continue the second action.

The action contents (steps S326 to S338) are identical to the control (steps S300 to S312) of causing hydrogen generating device 110a to transition to the first action, and the reference marks described in the component and step are performed such that the suffix of "hydrogen supply branch passage on-off valve 108a" is replaced with the suffix of "hydrogen supply branch passage on-off valve 108c", so that the description will be omitted.

When a request to stop the operation of hydrogen generating system 100 is made (step S339), controller 120 stops the operation of hydrogen generating system 100. On the other hand, steps S200 to S238 are repeated until the request to stop the operation of hydrogen generating system 100 is made.

Through the above action, when hydrogen generating device 110a performs the first action, the flow rate of the hydrogen-containing gas discharged from CO remover 102a of hydrogen generating device 110a that currently performs the first action, the carbon monoxide concentration being not decreased in the hydrogen-containing gas, is regulated by regulating the raw material supply amount of raw material supply unit 105a. Consequently, the flow rate of the hydrogen-containing gas mixed into the town gas flowing in raw material supply main passage 111 upstream of hydro-desulfurizer 113 through second recycle gas supply passage 107a can be regulated to an amount necessary for exhibition of the hydrodesulfurization performance of the hydrodesulfurization catalyst loaded in hydro-desulfurizer 113. Thus, thermal energy necessary for temperature rise of the hydro-desulfurizer can be decreased, and efficiency of hydrogen generating devices 110b, 110c and hydrogen generating system 100 can be increased.

The similar effect is obtained even if hydrogen generating devices 110b, 110c perform the first action.

As described above, in the present exemplary embodiment, the flow rate of the hydrogen-containing gas discharged from CO remover 102 of hydrogen generating device 110 that currently performs the first action, the carbon monoxide concentration being not decreased in the hydrogen-containing gas, is regulated by regulating the raw material supply amount of raw material supply unit 105. Consequently, the flow rate of the hydrogen-containing gas mixed into the town gas flowing in raw material supply main passage 111 upstream of hydro-desulfurizer 113 through second recycle gas supply passage 107 can be regulated to an amount necessary for exhibition of the hydrodesulfurization performance of the hydrodesulfurization catalyst loaded in hydro-desulfurizer 113. Consequently, thermal energy necessary for temperature rise of the hydro-desulfurizer can be decreased, and the efficiency of hydrogen generating device 110 can be increased and therefore the efficiency of hydrogen generating system 100 can be increased.

Raw material supply unit 105 has two functions of regulating the flow rate of the recycle gas supplied to hydro-desulfurizer 113 during the first action of hydrogen generating device 110 and of regulating the flow rate of the hydrogen-containing gas supplied to post-stage fuel cell 130 during the second action of hydrogen generating device 110. Consequently, it is not necessary for each of hydrogen generating devices 110a to 110c to have a function of regulating the flow rate of the recycle gas, and hydrogen generating system 100 can be constructed at low cost.

In the present exemplary embodiment, the regeneration of the oxidation catalyst by the first action is started from CO remover 102a installed in hydrogen generating device 110a. Alternatively, the action to regenerate the selective oxidation catalyst of CO remover 102 may be started in any order.

Irrespective of the first action and the second action of hydrogen generating device 110, raw material supply units 105a to 105c does not supply a constant flow rate, but the raw material supply amount may be regulated by following a load on fuel cell 130.

### (Seventh exemplary embodiment)

A block diagram illustrating a configuration of hydrogen generating system 100 according to a seventh exemplary embodiment of the present disclosure is identical to the block diagram of hydrogen generating system 100 of the fifth exemplary embodiment in FIG. 8, and the component of hydrogen generating system 100 of the seventh exemplary embodiment is designated by the same reference mark as hydrogen generating system 100 of the fifth exemplary embodiment.

Hydrogen generating system 100 of the seventh exemplary embodiment differs from hydrogen generating system 100 of the fifth or sixth exemplary embodiment in part of the action.

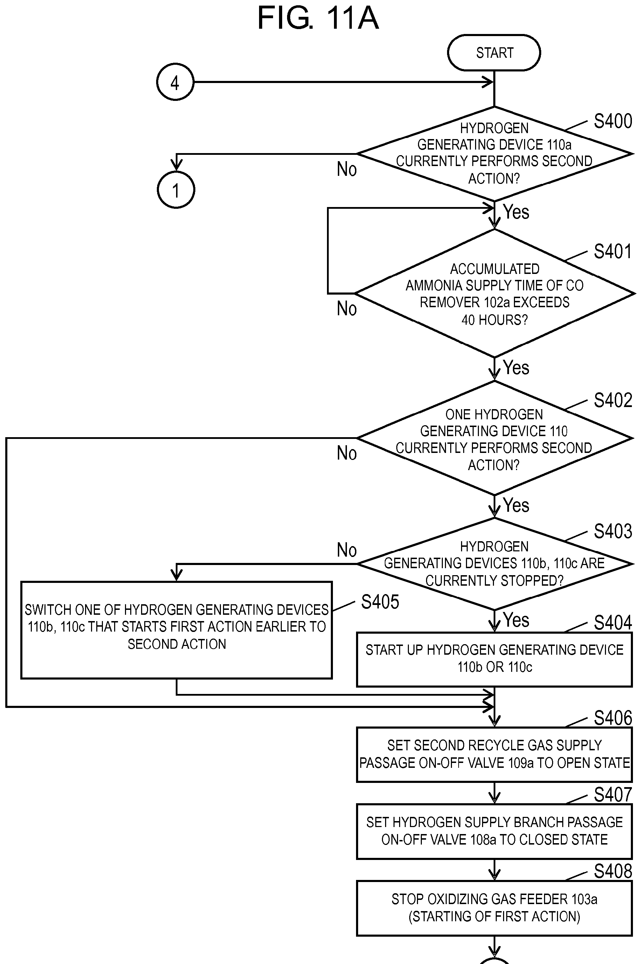

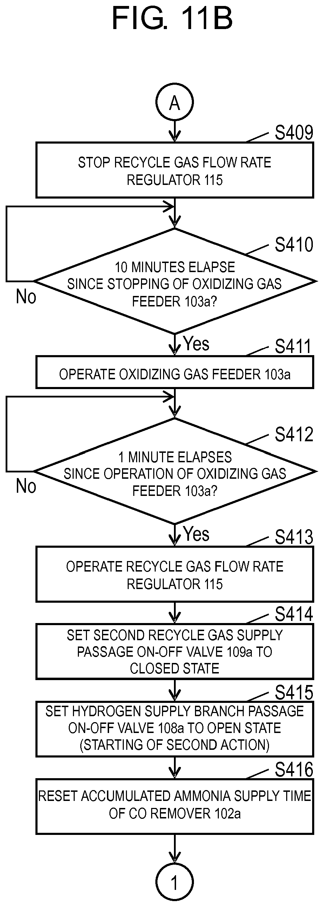

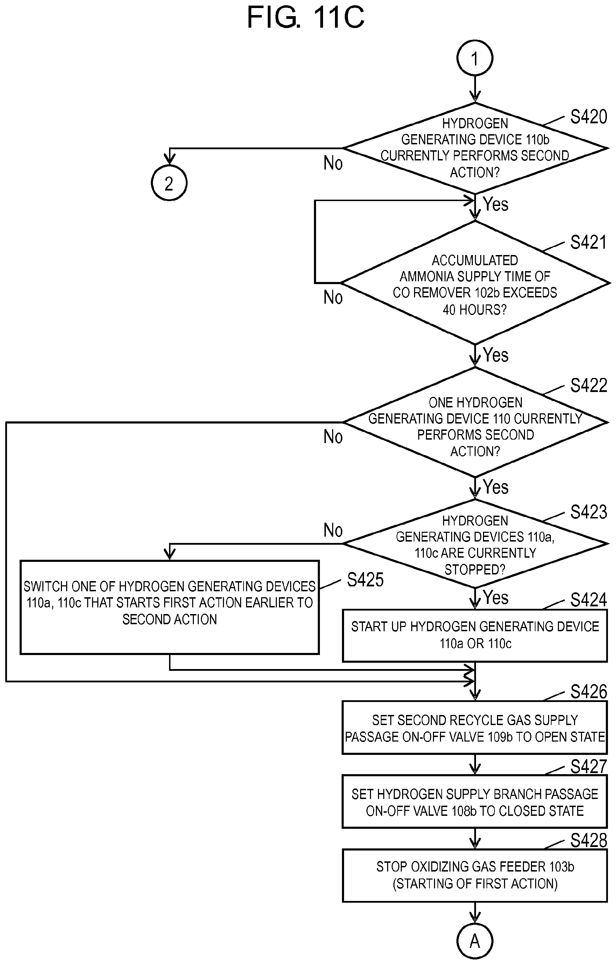

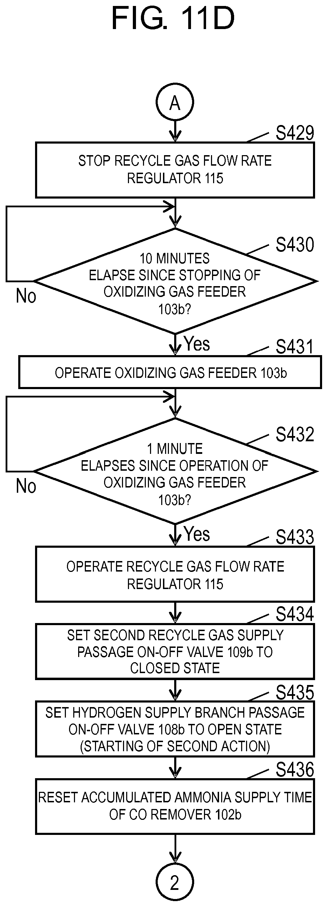

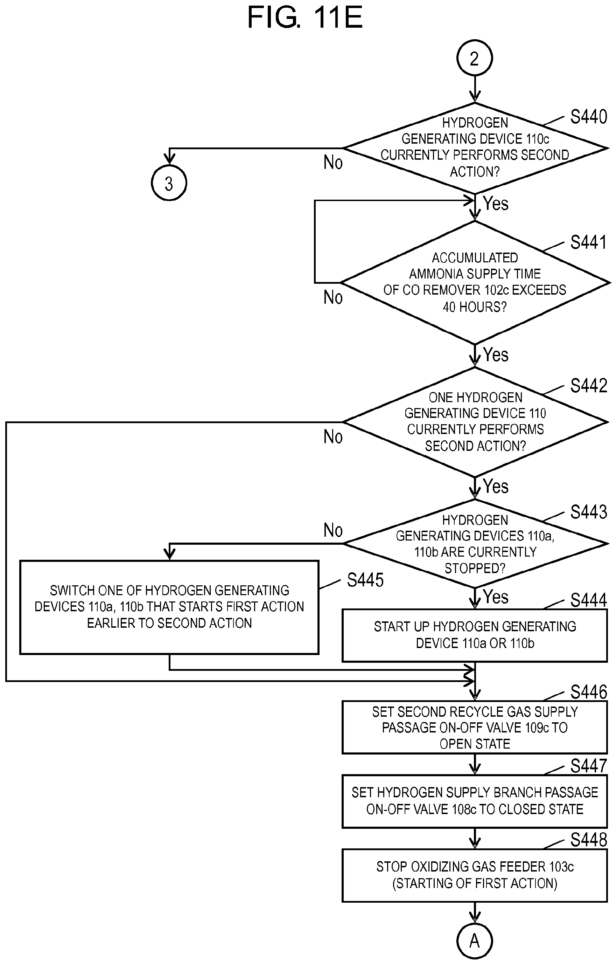

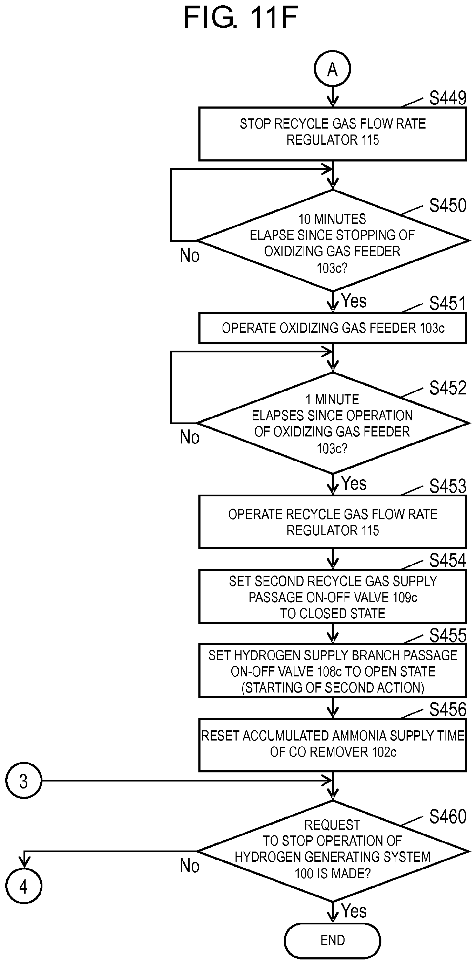

The action of hydrogen generating system 100 of the seventh exemplary embodiment of the present disclosure will be described below with reference to FIGS. 11A to 11F.

FIGS. 11A to 11F are views in which a flowchart illustrating the action of hydrogen generating system 100 of the seventh exemplary embodiment of the present disclosure is divided into six.

Before hydrogen generating device 110a starts the first action, controller 120 determines whether hydrogen generating device 110a currently performs the second action (step S400). When hydrogen generating device 110a does not perform the second action, the action transitions to step S420.

When an accumulated ammonia supply time that is a parameter correlated with an accumulated amount of ammonia supplied to CO remover 102a of hydrogen generating device 110a becomes greater than or equal to 40 hours (step S401), controller 120 determines whether hydrogen generating device 110b or hydrogen generating device 110c currently performs the second action (step S402).

At this point, the accumulated ammonia supply time is defined as a continuous operation time prospected to reach an accumulated ammonia supply amount (upper limit) until the carbon monoxide concentration in the hydrogen-containing gas downstream of hydrogen generating device 110a reaches a predetermined carbon monoxide concentration (10 ppm) at which the regeneration action is required since the operation of hydrogen generating device 110a is started. Specifically, the accumulated ammonia supply amount supplied to the oxidation catalyst of CO remover 102a is defined as the continuous operation time prospected to reach the accumulated ammonia supply amount (upper limit) at which the degradation of the oxidation catalyst progresses due to poisoning of ammonia and the carbon monoxide concentration in the hydrogen-containing gas downstream of hydrogen generating device 110a reaches the predetermined carbon monoxide concentration (10 ppm) at which the regeneration action is required. In this case, the accumulated ammonia supply time is 40 hours.

When both hydrogen generating devices 110b, 110c except for hydrogen generating device 110a do not perform the second action, controller 120 determines whether hydrogen generating device 110b or hydrogen generating device 110c is currently stopped (step S403).

When both hydrogen generating devices 110b, 110c are currently stopped, controller 120 starts up at least one of hydrogen generating devices 110b, 110c (step S404), and the action transitions to step S406.

When at least one of hydrogen generating devices 110b, 110c is currently operated in step S403, one of hydrogen generating devices 110b, 110c that starts the first action earlier is forcedly switched to the second action (step S405), and the action transitions to step S406.

When at least one of hydrogen generating devices 110b, 110c currently performs the second action in step S402, the action transitions to step S406.

In step S406, at first controller 120 sets second recycle gas supply passage on-off valve 109a to the open state in order to cause hydrogen generating device 110a to start the first action with respect to CO remover 102a.

Subsequently, controller 120 sets hydrogen supply branch passage on-off valve 108a to the closed state (step S407), and supplies the whole amount of the hydrogen-containing gases discharged from CO remover 102a to the town gas flowing in raw material supply main passage 111 upstream of hydro-desulfurizer 113 through second recycle gas supply passage 107a.

Subsequently, in order to set the inside of CO remover 102a to the reducing atmosphere, controller 120 stops oxidizing gas feeder 103a to block the supply of air to CO remover 102a, thereby starting the first action of hydrogen generating device 110a (step S408).

Subsequently, controller 120 stops recycle gas flow rate regulator 115 to supply the whole amount of the hydrogen-containing gases discharged from CO removers 102b, 102c to fuel cell 130 (step S409).

In step S410, controller 120 counts the time since the stopping of oxidizing gas feeder 103a. When 10 minutes elapse since the stopping of oxidizing gas feeder 103a, the action transitions to step S411. Step S410 is repeated until 10 minutes elapse since the stopping of oxidizing gas feeder 103a. As used herein, the term "10 minutes" means the time that is previously obtained in the experimental manner and is necessary for the regeneration of the oxidation catalyst of CO remover 102a.

In step S411, controller 120 operates oxidizing gas feeder 103a to restart the supply of air to CO remover 102a, thereby restarting the oxidation reaction in CO remover 102a.

In step S412, controller 120 counts an elapsed time since the restarting of the action of oxidizing gas feeder 103a. When 1 minute elapses since the restarting of the action of oxidizing gas feeder 103a, the action transitions to step S413. Step S412 is repeated until 1 minute elapses since the restarting of the action of oxidizing gas feeder 103a. As used herein, the term "1 minute" means the time that is previously obtained in the experimental manner and is necessary for the sufficient decrease in CO concentration since the starting of the supply of air to CO remover 102a.

Subsequently, controller 120 operates recycle gas flow rate regulator 115 (step S413), and sets second recycle gas supply passage on-off valve 109a to the closed state (step S414). At this point, parts of the hydrogen-containing gases discharged from CO removers 102a to 102c are supplied to the town gas flowing in raw material supply main passage 111 located upstream of hydro-desulfurizer 113 through first recycle gas supply passage 114.

Finally, controller 120 sets hydrogen supply branch passage on-off valve 108a to the open state, and hydrogen generating device 110a transitions from the first action to the second action (step S415). At this point, controller 120 resets the accumulated ammonia supply time of CO remover 102a to 0 hour (step S416).

Subsequently, controller 120 performs the control such that hydrogen generating device 110b transitions to the first action. Before hydrogen generating device 110b starts the first action, controller 120 determines whether hydrogen generating device 110b currently performs the second action (step S420). When hydrogen generating device 110b does not perform the second action, the action transitions to step S440.

When the accumulated ammonia supply time that is the parameter correlated with the accumulated ammonia supply amount to CO remover 102b of hydrogen generating device 110b becomes greater than or equal to 40 hours, controller 120 performs the control such that hydrogen generating device 110b transitions to the first action.

The action contents (steps S421 to S436) are identical to the control (steps S401 to S416) of causing hydrogen generating device 110a to transition to the first action. The reference marks described in the component and step are performed such that the suffix of "hydrogen supply branch passage on-off valve 108a" is replaced with the suffix of "hydrogen supply branch passage on-off valve 108b", and such that the suffix of "CO remover 102b or CO remover 102c" is replaced with the suffix of "CO remover 102a or CO remover 102c", so that the description will be omitted.

Subsequently, controller 120 performs control such that hydrogen generating device 110c transitions to the first action. Before hydrogen generating device 110c starts the first action, controller 120 determines whether hydrogen generating device 110c currently performs the second action (step S440). When hydrogen generating device 110c does not perform the second action, the action transitions to step S460.

When the accumulated ammonia supply time that is the parameter correlated with the accumulated ammonia supply amount to CO remover 102c of hydrogen generating device 110c becomes greater than or equal to 40 hours, hydrogen generating device 110c is controlled so as transition to the first action.

The action contents (steps S441 to S456) are identical to the control (steps S401 to S416) of causing hydrogen generating device 110a to transition to the first action, and the reference marks described in the component and step are performed such that the suffix of "hydrogen supply branch passage on-off valve 108a" is replaced with the suffix of "hydrogen supply branch passage on-off valve 108c", and such that the suffix of "CO remover 102b or CO remover 102c" is replaced with the suffix of "CO remover 102a or CO remover 102b", so that the description will be omitted.

When a request to stop the operation of hydrogen generating system 100 is made (step S460), controller 120 stops the operation of hydrogen generating system 100. On the other hand, the action transitions to step S400 until the request to stop the operation of hydrogen generating system 100 is made.

Through the above action, in the present exemplary embodiment, in the case that hydrogen generating device 110 in which the operation is currently stopped exists, and in the case that only one hydrogen generating device 110 currently performs the second action, the accumulated ammonia supply time of all CO removers 102 reaches 40 hours that is a threshold, and all hydrogen generating devices 110 simultaneously perform the first action. Consequently, the hydrogen-containing gas in which the carbon monoxide concentration is not decreased can be prevented from being supplied to fuel cell 130.

That is, the regeneration process can be performed on CO removers 102a to 102c of hydrogen generating devices 110a to 110c that currently perform the first action while the supply of the hydrogen-containing gas to fuel cell 130 is continued, so that satisfaction of a user who seeks the continuous operation of fuel cell 130 can be enhanced.

In the present exemplary embodiment, the regeneration of the oxidation catalyst by the first action is started from CO remover 102a installed in hydrogen generating device 110a. Alternatively, the action to regenerate the selective oxidation catalyst of CO remover 102 may be started in any order.

In the present exemplary embodiment, the continuous operation time at which the accumulated ammonia supply amount is prospected to reach the upper limit is defined as the parameter correlated with accumulated ammonia supply amount in the present disclosure. However, for more safety, the continuous operation time (for example, 30 hours) at which the accumulated ammonia supply amount is prospected to reach a predetermined value less than the upper limit may be defined as the parameter correlated with accumulated ammonia supply amount.

Any parameter correlated with the accumulated ammonia supply amount, such as an accumulated operation time of hydrogen generating device 110 and an accumulated raw material supply amount to reformer 101, may be used as the parameter correlated with the accumulated ammonia supply amount in the present disclosure.

It is clear from the above description of the present exemplary embodiments that those skilled in the art can make modifications and other exemplary embodiments of the present disclosure. Thus, the above description should be interpreted as only illustration, and is intended to teach the best mode carrying out the present disclosure to those skilled in the art.

### INDUSTRIAL APPLICABILITY

As described above, the present disclosure obtains a particular effect that the hydrogen generating system that continuously and stably supplies the hydrogen-containing gas to the hydrogen utilization device for a long time while preventing the degradation of the selective oxidation catalyst contained in the CO remover due to ammonia can be constructed. Thus, the present disclosure is optimal and useful to application in which the continuous and stable supply of the hydrogen-containing gas for a long time is required in the hydrogen generating system that can eliminate the poisoning of the selective oxidation catalyst progressing over time and generate the hydrogen-containing gas by reforming the hydrocarbon raw material containing nitrogen.

### REFERENCE MARKS IN THE DRAWINGS

- 1, 1a, 1b, 1c: reformer
- 2, 2a, 2b, 2c: CO remover
- 3a, 3b, 3c: combustor
- 4a, 4b, 4c: hydro-desulfurizer
- 5, 5a, 5b, 5c: raw material supply unit
- 6a, 6b, 6c: fuel supply unit
- 7a, 7b, 7c: oxidizing gas feeder
- 8a, 8b, 8c: hydrogen supply passage
- 9, 9a, 9b, 9c: recycle passage
- 10: raw material supply passage
- 11a, 11b, 11c: hydrogen supply passage sealing valve
- 12a, 12b, 12c: recycle passage sealing valve
- 13: communication passage
- 20, 20a, 20b, 20c: hydrogen generating device
- 31, 32, 33: hydrogen generating system
- 41: fuel cell
- 42: hydrogen storage tank
- 50: controller
- 100: hydrogen generating system
- 101, 101a, 101b, 101c: reformer
- 102, 102a, 102b, 102c: CO remover
- 103a, 103b, 103c: oxidizing gas feeder
- 104a, 104b, 104c: raw material supply branch passage
- 105, 105a, 105b, 105c: raw material supply unit
- 106a, 106b, 106c: hydrogen supply branch passage
- 107, 107a, 107b, 107c: second recycle gas supply passage
- 108a, 108b, 108c: hydrogen supply branch passage on-off valve
- 109a, 109b, 109c: second recycle gas supply passage on-off valve
- 110, 110a, 110b, 110c: hydrogen generating device
- 111: raw material supply main passage
- 112: hydrogen supply main passage
- 113: hydro-desulfurizer
- 114: first recycle gas supply passage
- 115: recycle gas flow rate regulator
- 116: heater
- 120: controller
- 130: fuel cell

## Claims

1. A hydrogen generating system comprising:
a plurality of hydrogen generating devices connected in parallel; and
a controller, wherein
each of the plurality of hydrogen generating devices includes
a reformer that generates a hydrogen-containing gas from a raw material,
a carbon monoxide (CO) remover that decreases a concentration of carbon monoxide contained in the hydrogen-containing gas by using a selective oxidation catalyst and an oxidizing gas,
an oxidizing gas feeder that supplies the oxidizing gas to the CO remover,
a raw material supply passage through which the raw material is supplied to the reformer,
a raw material supply unit provided in a middle of the raw material supply passage,
a hydrogen supply passage through which the hydrogen-containing gas discharged from the CO remover is supplied to a hydrogen utilization device,
a recycle passage that is branched at a branching point from a middle of the hydrogen supply passage to mix at least part of the hydrogen-containing gas discharged from the CO remover into the raw material, and
a hydrogen supply passage sealing valve provided downstream of the branching point in the hydrogen supply passage,
the controller is configured to cause at least one of the plurality of hydrogen generating devices to perform a second action to supply the oxidizing gas and the hydrogen-containing gas to the CO remover, while at least another of the plurality of hydrogen generating devices performs a first action to supply the hydrogen-containing gas to the CO remover with the supply of the oxidizing gas to the CO remover stopped, and
the controller is configured to close the hydrogen supply passage sealing valve of the at least another of the plurality of hydrogen generating devices that currently performs the first action to mix the hydrogen-containing gas discharged from the CO remover of the at least another of the plurality of hydrogen generating devices that currently performs the first action into the raw material through the recycle passage.

2. The hydrogen generating system according to claim 1, wherein
the each of the plurality of hydrogen generating devices includes a hydro-desulfurizer in the raw material supply passage, the hydro-desulfurizer removing a sulfur component from the raw material by a hydrodesulfurization reaction, and
the recycle passage is a passage through which the at least part of the hydrogen-containing gas discharged from the CO remover is supplied to a part of the raw material supply passage to mix the at least part of the hydrogen-containing gas into the raw material upstream of the hydro-desulfurizer, the part of the raw material supply passage being located upstream of the hydro-desulfurizer in the raw material supply passage.

3. The hydrogen generating system according to claim 1 or 2, wherein
the recycle passage is connected to the raw material supply passage so as to mix the at least part of the hydrogen-containing gas discharged from the CO remover into the raw material before branched in the plurality of hydrogen generating devices,
a recycle passage sealing valve that opens and closes the recycle passage is provided in the recycle passage, and
the controller is configured to open the recycle passage sealing valve of the at least another of the plurality of hydrogen generating devices that currently performs the first action, and close the recycle passage sealing valve of the at least one of the plurality of hydrogen generating devices supplied with the hydrogen-containing gas from the at least another of the plurality of hydrogen generating devices through the recycle passage.

4. The hydrogen generating system according to claim 1 or 2, wherein
the recycle passage is connected to the raw material supply passage so as to mix the at least part of the hydrogen-containing gas discharged from the CO remover into the raw material after branched in the plurality of hydrogen generating devices,
the recycle passage includes a plurality of recycle passages,
the plurality of recycle passages communicate with each other through a communication passage,
the hydrogen generating system includes a recycle passage sealing valve that opens and closes the recycle passage between a connecting point of the communication passage and the recycle passage and a starting point of the recycle passage,
the controller is configured to open the recycle passage sealing valve of the at least another of the plurality of hydrogen generating devices that currently performs the first action, and close the recycle passage sealing valve of the at least one of the plurality of hydrogen generating devices whose the recycle passage is supplied with the hydrogen-containing gas from the at least another of the plurality of hydrogen generating devices through the communication passage.

5. A method for operating a hydrogen generating system including a plurality of hydrogen generating devices connected in parallel, each of the plurality of hydrogen generating devices including a reformer that generates a hydrogen-containing gas from a raw material, a CO remover that decreases a concentration of carbon monoxide contained in the hydrogen-containing gas by using a selective oxidation catalyst and an oxidizing gas, an oxidizing gas feeder that supplies the oxidizing gas to the CO remover, a raw material supply passage through which the raw material is supplied to the reformer, a raw material supply unit provided in a middle of the raw material supply passage, a hydrogen supply passage through which the hydrogen-containing gas discharged from the CO remover is supplied to a hydrogen utilization device, a recycle passage that is branched at a branching point from a middle of the hydrogen supply passage to mix at least part of the hydrogen-containing gas discharged from the CO remover into the raw material, and a hydrogen supply passage sealing valve provided downstream of the branching point in the hydrogen supply passage,
the method comprising:
causing at least one of the plurality of hydrogen generating devices to perform a second action to supply the oxidizing gas and the hydrogen-containing gas to the CO remover, while at least another of the plurality of hydrogen generating devices performs a first action to supply the hydrogen-containing gas to the CO remover with the supply of the oxidizing gas to the CO remover stopped; and
closing the hydrogen supply passage sealing valve of the at least another of the plurality of hydrogen generating devices that currently performs the first action to mix the hydrogen-containing gas discharged from the CO remover of the at least another of the plurality of hydrogen generating devices that currently performs the first action into the raw material through the recycle passage.

## Patentansprüche

1. Wasserstofferzeugungs-System, umfassend:
eine Vielzahl parallel verbundener Wasserstofferzeugungs-Vorrichtungen; und
eine Steuerungseinrichtung, wobei
jede der Vielzahl von Wasserstofferzeugungs-Vorrichtungen
einen Reformer, der ein wasserstoffhaltiges Gas aus einem Rohstoff erzeugt,
eine Einrichtung zum Entfernen von Kohlenmonoxid (CO), die eine Konzentration des in dem wasserstoffhaltigen Gas enthaltenen Kohlenmonoxids unter Verwendung eines selektiven Oxidationskatalysators und eines oxidierenden Gases verringert,
eine Einrichtung zum Zuleiten von oxidierendem Gas, die der Einrichtung zum Entfernen von CO das oxidierende Gas zuleitet,
einen Kanal zur Zufuhr von Rohstoff, über den dem Reformer der Rohstoff zugeführt wird,
eine Einheit zur Zufuhr von Rohstoff, die in einer Mitte des Kanals zur Zufuhr von Rohstoff vorhanden ist,
einen Kanal zur Zufuhr von Wasserstoff, über den das aus der Einrichtung zum Entfernen von CO abgeleitete wasserstoffhaltige Gas einer Vorrichtung zur Nutzung von Wasserstoff zugeführt wird,
einen Rückführungskanal, der an einem Abzweigungspunkt von einer Mitte des Kanals zur Zufuhr von Wasserstoff abzweigt, um wenigstens einen Teil des aus der Einrichtung zum Entfernen von CO abgeleiteten wasserstoffhaltigen Gases dem Rohstoff beizumischen, und
ein Ventil zum Verschließen des Kanals zur Zufuhr von Wasserstoff, das stromab von dem Abzweigungspunkt in dem Kanal zur Zufuhr von Wasserstoff vorhanden ist,
wobei die Steuerungseinrichtung so ausgeführt ist, dass sie wenigstens eine der Vielzahl von Wasserstofferzeugungs-Vorrichtungen veranlasst, einen zweiten Vorgang zum Zuführen des oxidierenden Gases und des wasserstoffhaltigen Gases zu der Einrichtung zum Entfernen von CO durchzuführen, während wenigstens eine andere der Vielzahl von Wasserstofferzeugungs-Vorrichtungen einen ersten Vorgang zum Zuführen des wasserstoffhaltigen Gases zu der Einrichtung zum Entfernen von CO durchführt und dabei die Zufuhr des oxidierenden Gases zu der Einrichtung zum Entfernen von CO unterbrochen ist, und
die Steuerungseinrichtung so ausgeführt ist, dass sie das Ventil zum Verschließen des Kanals zur Zufuhr von Wasserstoff wenigstens der anderen der Vielzahl von Wasserstofferzeugungs-Vorrichtungen schließt, die aktuell den ersten Vorgang durchführt, um das aus der Einrichtung zum Entfernen von CO wenigstens der anderen der Vielzahl von Wasserstofferzeugungs-Vorrichtungen abgeleitete wasserstoffhaltige Gas, die aktuell den ersten Vorgang durchführt, über den Rückführungskanal dem Rohstoff beizumischen.

2. Wasserstofferzeugungs-System nach Anspruch 1, wobei
jede der Vielzahl von Wasserstofferzeugungs-Vorrichtungen eine Hydro-Entschwefelungseinrichtung in dem Kanal zur Zufuhr von Rohstoff enthält, und die Hydro-Entschwefelungseinrichtung mittels einer Hydro-Entschwefelungsreaktion eine Schwefelkomponente aus dem Rohstoff entfernt, und
der Rückführungskanal ein Kanal ist, über den wenigstens der Teil des aus der Einrichtung zum Entfernen von CO abgeleiteten wasserstoffhaltigen Gases einem Teil des Kanals zur Zufuhr von Rohstoff zugeführt wird, um wenigstens den Teil des wasserstoffhaltigen Gases dem Rohstoff stromauf von der Hydro-Entschwefelungseinrichtung beizumischen, wobei sich der Teil des Kanals zur Zufuhr von Rohstoff stromauf von der Hydro-Entschwefelungseinrichtung in dem Kanal zur Zufuhr von Rohstoff befindet.

3. Wasserstofferzeugungs-System nach Anspruch 1 oder 2, wobei
der Rückführungskanal mit dem Kanal zur Zufuhr von Rohstoff verbunden ist, um so wenigstens den Teil des aus der Einrichtung zum Entfernen von CO abgeleiteten wasserstoffhaltigen Gases, dem Rohstoff beizumischen, bevor er auf die Vielzahl der Wasserstofferzeugungs-Vorrichtungen verzweigt wird,
ein Ventil zum Verschließen des Rückführungs-Kanals, das den Rückführungs-Kanal öffnet und schließt, in dem Rückführungs-Kanal vorhanden ist, und
die Steuerungseinrichtung so ausgeführt ist, dass sie das Ventil zum Verschließen des Rückführungskanals wenigstens der anderen der Vielzahl von Wasserstofferzeugungs-Vorrichtungen öffnet, die aktuell den ersten Vorgang durchführt, und das Ventil zum Verschließen des Rückführungskanals der wenigstens einen der Vielzahl von Wasserstofferzeugungs-Vorrichtungen schließt, der das wasserstoffhaltige Gas wenigstens von der anderen der Vielzahl von Wasserstofferzeugungs-Vorrichtungen über den Rückführungs-Kanal zugeführt wird.

4. Wasserstofferzeugungs-System nach Anspruch 1 oder 2, wobei
der Rückführungskanal mit dem Kanal zur Zufuhr von Rohstoff verbunden ist, um so wenigstens den Teil des aus der Einrichtung zum Entfernen von CO abgeleiteten wasserstoffhaltigen Gases, dem Rohstoff beizumischen, nachdem er auf die Vielzahl der Wasserstofferzeugungs-Vorrichtungen verzweigt wurde,
der Rückführungskanal eine Vielzahl von Rückführungskanälen einschließt,
die Vielzahl von Rückführungskanälen über einen Verbindungskanal miteinander in Verbindung stehen,
das Wasserstofferzeugungs-System ein Ventil zum Verschließen des Rückführungskanals, das den Rückführungskanal öffnet und schließt, zwischen einem Verbindungspunkt des Verbindungskanals und des Rückführungskanals und einem Ausgangspunkt des Rückführungs-kanals enthält,
die Steuerungseinrichtung so ausgeführt ist, dass sie das Ventil zum Verschließen des Rückführungskanals wenigstens der anderen der Vielzahl von Wasserstofferzeugungs-Vorrichtungen öffnet, die aktuell den ersten Vorgang durchführt, und das Ventil zum Verschließen des Rückführungskanals der wenigstens einen der Vielzahl von Wasserstofferzeugungs-Vorrichtungen schließt, deren Rückführungs-Kanal das wasserstoffhaltige Gas wenigstens von der anderen der Vielzahl von Wasserstofferzeugungs-Vorrichtungen über den Verbindungskanal zugeführt wird.

5. Verfahren zum Betreiben eines Wasserstofferzeugungs-Systems, das eine Vielzahl parallel verbundener Wasserstofferzeugungs-Vorrichtungen enthält, wobei jede der Vielzahl von Wasserstofferzeugungs-Vorrichtungen einen Reformer, der ein wasserstoffhaltiges Gas aus einem Rohstoff erzeugt, eine Einrichtung zum Entfernen von Kohlenmonoxid (CO), die eine Konzentration des in dem wasserstoffhaltigen Gas enthaltenen Kohlenmonoxids unter Verwendung eines selektiven Oxidationskatalysators und eines oxidierenden Gases verringert, eine Einrichtung zum Zuleiten von oxidierendem Gas, die der Einrichtung zum Entfernen von CO das oxidierende Gas zuleitet, einen Kanal zur Zufuhr von Rohstoff, über den dem Reformer der Rohstoff zugeführt wird, eine Einheit zur Zufuhr von Rohstoff, die in einer Mitte des Kanals zur Zufuhr von Rohstoff vorhanden ist, einen Kanal zur Zufuhr von Wasserstoff, über den das aus der Einrichtung zum Entfernen von CO abgeleitete wasserstoffhaltige Gas einer Vorrichtung zur Nutzung von Wasserstoff zugeführt wird, einen Rückführungskanal, der an einem Abzweigungspunkt von einer Mitte des Kanals zur Zufuhr von Wasserstoff abzweigt, um wenigstens einen Teil des aus der Einrichtung zum Entfernen von CO abgeleiteten wasserstoffhaltigen Gases dem Rohstoff beizumischen, und ein Ventil zum Verschließen des Kanals zur Zufuhr von Wasserstoff enthält, das stromab von dem Abzweigungspunkt in dem Kanal zur Zufuhr von Wasserstoff vorhanden ist,
wobei das Verfahren umfasst, dass
wenigstens eine der Vielzahl von Wasserstofferzeugungs-Vorrichtungen veranlasst wird, einen zweiten Vorgang zum Zuführen des oxidierenden Gases und des wasserstoffhaltigen Gases zu der Einrichtung zum Entfernen von CO durchzuführen, während wenigstens eine andere der Vielzahl von Wasserstofferzeugungs-Vorrichtungen einen ersten Vorgang zum Zuführen des wasserstoffhaltigen Gases zu der Einrichtung zum Entfernen von CO durchführt und dabei die Zufuhr des oxidierenden Gases zu der Einrichtung zum Entfernen von CO unterbrochen ist, und
das Ventil zum Verschließen des Kanals zur Zufuhr von Wasserstoff wenigstens der anderen der Vielzahl von Wasserstofferzeugungs-Vorrichtungen geschlossen wird, die aktuell den ersten Vorgang durchführt, um das aus der Einrichtung zum Entfernen von CO wenigstens der anderen der Vielzahl von Wasserstofferzeugungs-Vorrichtungen abgeleitete wasserstoffhaltige Gas, die aktuell den ersten Vorgang durchführt, über den Rückführungskanal dem Rohstoff beizumischen.

## Revendications

1. Système de génération d'hydrogène comprenant :
une pluralité de dispositifs de génération d'hydrogène reliés en parallèle ; et
un module de commande,
chacun de la pluralité de dispositifs de génération d'hydrogène incluant
un reformeur qui génère un gaz contenant de l'hydrogène à partir d'une matière première,
un suppresseur de monoxyde de carbone (CO) qui diminue une concentration de monoxyde de carbone présent dans le gaz contenant de l'hydrogène en utilisant un catalyseur d'oxydation sélective et un gaz oxydant,
un dispositif d'alimentation en gaz oxydant qui fournit le gaz oxydant au suppresseur de CO,
un passage d'alimentation en matière première à travers lequel la matière première est fournie au reformeur,
une unité d'alimentation en matière première fournie dans un milieu du passage d'alimentation en matière première,
un passage d'alimentation en hydrogène à travers lequel le gaz contenant de l'hydrogène sortant du suppresseur de CO est fourni à un dispositif consommateur d'hydrogène,
un passage de recyclage qui s'embranche au niveau d'un point d'embranchement depuis un milieu du passage d'alimentation en hydrogène pour mélanger au moins une partie du gaz contenant de l'hydrogène sortant du suppresseur de CO dans la matière première, et
une vanne de coupure de passage d'alimentation en hydrogène fournie en aval du point d'embranchement dans le passage d'alimentation en hydrogène,
le module de commande étant configuré pour amener au moins un dispositif de la pluralité de dispositifs de génération d'hydrogène à effectuer une deuxième action pour fournir le gaz oxydant et le gaz contenant de l'hydrogène au suppresseur de CO, tandis qu'au moins un autre dispositif de la pluralité de dispositifs de génération d'hydrogène effectue une première action pour fournir le gaz contenant de l'hydrogène au suppresseur de CO alors que la fourniture de gaz oxydant au suppresseur de CO est arrêtée, et
le module de commande étant configuré pour fermer la vanne de coupure du passage d'alimentation en hydrogène de l'au moins un autre dispositif de la pluralité de dispositifs de génération d'hydrogène qui est en train d'effectuer la première action pour mélanger le gaz contenant de l'hydrogène sortant du suppresseur de CO de l'au moins un autre dispositif de la pluralité de dispositifs de génération d'hydrogène qui est en train d'effectuer la première action dans la matière première à travers le passage de recyclage.

2. Système de génération d'hydrogène selon la revendication 1, dans lequel
chacun de la pluralité de dispositifs de génération d'hydrogène inclut un module d'hydrodésulfuration dans le passage d'alimentation en matière première, le module d'hydrodésulfuration éliminant un constituant soufré de la matière première par une réaction d'hydrodésulfuration, et
le passage de recyclage est un passage à travers lequel l'au moins une partie du gaz contenant de l'hydrogène sortant du suppresseur de CO est fournie à une partie du passage d'alimentation en matière première pour mélanger l'au moins une partie du gaz contenant de l'hydrogène dans la matière première en amont du module d'hydrodésulfuration, la partie de passage d'alimentation en matière première étant située en amont du module d'hydrodésulfuration dans le passage d'alimentation en matière première.

3. Système de génération d'hydrogène selon la revendication 1 ou 2, dans lequel
le passage de recyclage est relié au passage d'alimentation en matière première de façon à mélanger la partie au moins du gaz contenant de l'hydrogène sortant du suppresseur de CO dans la matière première avant l'embranchement dans la pluralité de dispositifs de génération d'hydrogène,
une vanne de coupure du passage de recyclage qui ouvre et ferme le passage de recyclage est fournie dans le passage de recyclage, et
le module de commande est configuré pour ouvrir la vanne de coupure du passage de recyclage de l'au moins un autre dispositif de la pluralité de dispositifs de génération d'hydrogène qui est en train d'effectuer la première action et fermer la vanne de coupure du passage de recyclage de l'au moins un dispositif de la pluralité de dispositifs de génération d'hydrogène alimenté en gaz contenant de l'hydrogène provenant de l'au moins un autre dispositif de la pluralité de dispositifs de génération d'hydrogène par le biais du passage de recyclage.

4. Système de génération d'hydrogène selon la revendication 1 ou 2, dans lequel
le passage de recyclage est relié au passage d'alimentation en matière première de façon à mélanger la partie au moins du gaz contenant de l'hydrogène sortant du suppresseur de CO dans la matière première après l'embranchement dans la pluralité de dispositifs de génération d'hydrogène,
le passage de recyclage inclut une pluralité de passages de recyclage,
la pluralité de passages de recyclage communiquent l'un avec l'autre par le biais d'un passage de communication,
le système de génération d'hydrogène inclut une vanne de coupure du passage de recyclage qui ouvre et ferme le passage de recyclage entre un point de jonction du passage de communication et du passage de recyclage et un point de départ du passage de recyclage,
le module de commande est configuré pour ouvrir la vanne de coupure du passage de recyclage de l'au moins un autre dispositif de la pluralité de dispositifs de génération d'hydrogène qui est en train d'effectuer la première action, et fermer la vanne de coupure du passage de recyclage de l'au moins un dispositif de la pluralité de dispositifs de génération d'hydrogène dont le passage de recyclage est alimenté en gaz contenant de l'hydrogène provenant de l'au moins un autre dispositif de la pluralité de dispositifs de génération d'hydrogène par le biais du passage de communication.

5. Procédé de fonctionnement d'un système de génération d'hydrogène incluant une pluralité de dispositifs de génération d'hydrogène reliés en parallèle, chacun de la pluralité de dispositifs de génération d'hydrogène incluant un reformeur qui génère un gaz contenant de l'hydrogène à partir d'une matière première, un suppresseur de CO qui diminue une concentration de monoxyde de carbone présent dans le gaz contenant de l'hydrogène en utilisant un catalyseur d'oxydation sélective et un gaz oxydant, un dispositif d'alimentation en gaz oxydant qui fournit le gaz oxydant au suppresseur de CO, un passage d'alimentation en matière première à travers lequel la matière première est fournie au reformeur, une unité d'alimentation en matière première fournie dans un milieu du passage d'alimentation en matière première, un passage d'alimentation en hydrogène à travers lequel le gaz contenant de l'hydrogène sortant du suppresseur de CO est fourni à un dispositif consommateur d'hydrogène, un passage de recyclage qui s'embranche à partir d'un point d'embranchement depuis un milieu du passage d'alimentation en hydrogène pour mélanger au moins une partie du gaz contenant de l'hydrogène sortant du suppresseur de CO dans la matière première, et une vanne de coupure de passage d'alimentation en hydrogène fournie en aval du point d'embranchement dans le passage d'alimentation en hydrogène,
le procédé comprenant :
le fait d'amener au moins un dispositif de la pluralité de dispositifs de génération d'hydrogène à effectuer une deuxième action pour fournir le gaz oxydant et le gaz contenant de l'hydrogène au suppresseur de CO, tandis qu'au moins un autre dispositif de la pluralité de dispositifs de génération d'hydrogène effectue une première action pour fournir le gaz contenant de l'hydrogène au suppresseur de CO alors que la fourniture de gaz oxydant au suppresseur de CO est arrêtée ; et
la fermeture de la vanne de coupure du passage d'alimentation en hydrogène de l'au moins un autre dispositif de la pluralité de dispositifs de génération d'hydrogène qui est en train d'effectuer la première action pour mélanger le gaz contenant de l'hydrogène sortant du suppresseur de CO de l'au moins un autre dispositif de la pluralité de dispositifs de génération d'hydrogène qui est en train d'effectuer la première action dans la matière première à travers le passage de recyclage.
